(19) Europäisches Patentamt / European Patent Office / Office européen des brevets

(11) **EP 3 231 823 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
**C08F 220/18** (2006.01)  **C09J 133/08** (2006.01)
**C09J 139/04** (2006.01)  **C09J 139/06** (2006.01)
**C09J 5/00** (2006.01)

(21) Anmeldenummer: **17160276.6**

(22) Anmeldetag: **10.03.2017**

(54) **EINFÄRBBARER PRIMER**

DYEABLE PRIMERS

APPRÊT COLORABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2016 US 201662321934 P**
**18.05.2016 US 201615157845**

(43) Veröffentlichungstag der Anmeldung:
**18.10.2017 Patentblatt 2017/42**

(73) Patentinhaber: **tesa SE**
**22848 Norderstedt (DE)**

(72) Erfinder:
 • **Schümann, Uwe**
   **25421 Pinneberg (DE)**
 • **Dietze, Sebastian**
   **24568 Kaltenkirchen (DE)**
 • **Baumann, Tim**
   **20257 Hamburg (DE)**
 • **Böcker, Patrick**
   **22397 Hamburg (DE)**

(56) Entgegenhaltungen:
**DE-A1-102014 208 814**

 • **WOLFRAM SCHNEIDER: "GENIOSIL TM Alpha Silane - Terminated Polymers As Novel Binders For Fast Curing Elastic Adhesives", INTERNET CITATION, 2005, Seiten 1-14, XP002446177, Gefunden im Internet: URL:http://www.wacker.com/internet/webcache/de_DE/_Downloads/GENIOSIL_Reprint_AS_Adh esives_BRO_EN.pdf [gefunden am 2007-08-09]**
 • **Kenta Adachi and Tomoyuki Hirano: "Controllable Silane Water-Cross-Linking Kinetics and Curability of Ethylene-Propylene Copolymer by Amine Compounds", I&EC research, Bd. 47 14. Februar 2008 (2008-02-14), Seiten 1812-1818, XP002771852, Gefunden im Internet: URL:http://pubs.acs.org/doi/pdf/10.1021/ie 0708069**

**Beschreibung**

Die vorliegende Erfindung betrifft das technische Gebiet der Primer zur Verbesserung der Adhäsion von Klebebändern, insbesondere auf hydrophilen Oberflächen wie beispielsweise Glas- oder Keramikoberflächen. Insbesondere wird eine Primer-Zusammensetzung zur Verbesserung der Adhäsion von Polyacrylat-basierten Klebebändern vorgeschlagen, die Pigmente oder andere funktionale, füllstoffartige Stoffe in hoher Konzentration enthalten kann, ohne dass die haftvermittelnde Wirkung dadurch wesentlich beeinträchtigt wird. Die vorgeschlagene Primer-Zusammensetzung besitzt eine hohe Anfangsfestigkeit und ermöglicht innerhalb einer gewissen Zeitspanne das Repositionieren eines darauf verklebten Klebebandes.

Stand der Technik

Primer, oft auch Haftvermittler oder Adhesion Promoter genannt, sind vielfach in Form von kommerziellen Produkten oder aus der technischen Literatur bekannt. Eine Übersicht über die in Primer-Formulierungen verwendbaren Stoffe bzw. Stoffklassen findet sich in J. Bielemann, Lackadditive (1998), Kap. 4.3., S.114-129.

Primerzusammensetzungen werden in einer Vielzahl von Patentschriften offenbart, jedoch werden nur in wenigen Schriften Primer beschrieben, mit denen eine Haftungsverbesserung von Klebebändern erreicht werden soll.

In der Schrift WO 2008/094721 A1 wird im Zusammenhang mit Klebebandanwendungen eine Primerzusammensetzung auf Basis eines Maleinsäureanhydrid-modifizierten Polyolefins und eines organischen Diamins vorgeschlagen, mit der eine Haftungsverbesserung auf polyolefinbasierten Materialien erzielt werden soll.

In der JP 2008-156566 A wird für Klebebandanwendungen eine Primerzusammensetzung auf Basis eines azidischen Acrylat-Polymers und eines fluorhaltigen Copolymers offenbart.

Zur Verbesserung der Haftung eines Klebebandes auf mit Melaminharz behandelten Substraten schlägt die WO 02/100961 A1 eine Primerzusammensetzung vor, die ein Acrylat-Copolymer, das mit einer Aminoalkylgruppe gepfropft ist, die endständige primäre Aminogruppen enthält, weiterhin ein Acrylat-Copolymer mit Carboxylgruppen in der molekularen Kette und ein Lösungsmittel enthält.

Die WO 03/052021 A1 beschreibt eine Primerzusammensetzung, die ein Polydiorganosiloxan-Polyharnstoff-Copolymer mit elektronenreichen Gruppen enthält und die Gestalt eines Primers, eines Klebstoffs, eines Haftklebstoffs oder eines anderen Beschichtungsstoffes haben kann. Auch diese Primerzusammensetzung wird in Zusammenhang mit Klebebandanwendungen genannt.

In den Schriften EP 833 865 B1, EP 833 866 B1, EP 739 383 B1 und US 5,602,202 werden Primerzusammensetzungen auf Basis von Mischungen aus Styrol-Dien-Blockcopolymeren oder Styrol-hydriertem Dien-Blockcopolymeren und ausgewählten Polyacrylaten beschrieben, die die Haftung von beidseitig haftklebrigen, geschäumten Klebebändern auf sowohl niederenergetischen als auch höherenergetischen Oberflächen verbessern sollen.

Ein Primer, der für die Verbesserung der Adhäsion von Klebebändern auf schwer verklebbaren Substraten, insbesondere auf verzinktem Stahl sowie auf thermoplastischen Elastomeren auf Olefinbasis wie z.B. PP/EPDM geeignet ist, ist in der DE 10 2011 077 510 A1 offenbart.

Keine der genannten Schriften befasst sich jedoch mit der Haftvermittlung auf Glas.

Zur Haftvermittlung auf hydrophilen Untergründen wie z.B. Glas kommen häufig Silan-Primer bzw. Silan-Haftvermittler zum Einsatz. Solche sind zum Beispiel beschrieben in der DE 10 2009 007 930 A1 oder der DE 10 2007 030 196 A1, ferner in der EP 577 014 A1, der EP 1 693 350 A1, EP 1 730 247 A1, US 2008 0245 271 A, US 2008 023 425 A oder der WO 2008/025846 A2.

Die in den genannten Schriften offenbarten Systeme sind jedoch nicht für die Verbesserung der Adhäsion von Klebebändern auf Glas ausgelegt. Sie enthalten dementsprechend keine geeigneten Komponenten, um die Adhäsion zu einem Haftklebstoff zu verbessern, insbesondere die Adhäsion zu einem Haftklebstoff aus Basis eines Copolymerisats aus Acrylsäureestern und optional Acrylsäure.

Verbesserungsbedarf besteht zusätzlich, wenn die Einarbeitung von Pigmenten oder anderen funktionalen Füllstoffen in den Primer in hoher Konzentration gewünscht ist. Häufig sind die sehr dünnflüssigen Dispersionen, Lösungen oder Zubereitungen der genannten Schriften kaum in der Lage, solche Füllstoffe aufzunehmen.

US 6,646,048 B2 offenbart eine Primerzusammensetzung aus einem reaktiven Acrylharz, das aus zwei verschiedenen Methacrylaten besteht, einer Silanverbindung, einem Epoxidharz vom Typ Bisphenol A und Ruß. Diese Primerzusammensetzung aus einem reaktiven Acrylharz und einem Silan eignet sich zwar für die Haftungsverbesserung einer Urethan-basierten Dichtmasse bzw. eines Reaktivklebstoffes auf Glas, für die Haftverbesserung eines Haftklebstoffbandes auf Glas ist sie jedoch als ungeeignet anzusehen. Anders als eine Urethan-basierte Dichtmasse und ein Reaktivklebstoff, die auch nach der Applikation noch vernetzen und so eine chemische Verbindung mit dem Primer eingehen können, ist die Polymerbasis der Haftklebstoffe während der Applikation des Klebebandes nicht mehr reaktiv. Durch die Primerzusammensetzung der US 6,646,048 B2 wird daher eine Haftverbesserung zwischen einem Klebeband und einem Glassubstrat nicht erreicht.

In den Schriften DE 10 2013 206 369 A1 und DE 10 2013 206 376 A1 werden Primer-Zusammensetzungen offenbart, die die Einarbeitung von Pigmenten ermöglichen und für die Verbesserung der Adhäsion von Klebebändern auf Glas ausgelegt sind. Nachteilig ist hier, dass die Anfangsfestigkeit der vorgeschlagenen Primer-Zusammensetzungen gering ist, so dass das Repositionieren eines auf einen frisch applizierten Primer verklebten Klebebandes nicht möglich ist. Beim Versuch, das Klebeband wieder zu entfernen und an etwas anderer Stelle neu aufzukleben, wird entweder der Primer vom Substrat mit abgezogen oder er spaltet kohäsiv. DE 10 2014 208 814 betrifft das technische Gebiet der Primer zur Verbesserung der Adhäsion von Klebebändern auf hydrophilen Oberflächen, beispielsweise auf Glas-oder Keramikoberflächen. Insbesondere wird eine Primer-Zusammensetzung zur Verbesserung der Adhäsion von Vinylcaprolactam und/oder Vinylpyrrolidon / Polyacrylat-basierten Klebebändern vorgeschlagen, die Pigmente oder andere funktionale, füllstoffartige Stoffe in hoher Konzentration enthalten kann, ohne dass die haftvermittelnde Wirkung dadurch wesentlich beeinträchtig wird.

Aufgabe der Erfindung ist allgemein die Bereitstellung eines Primers zur Verbesserung der Adhäsion von Klebebändern auf hydrophilen Oberflächen wie insbesondere Glas oder Keramik. Der Primer soll so gestaltet sein, dass er mit Pigmenten, insbesondere mit Farbpigmenten, aber auch mit anderen funktionalen Füllstoffen in hoher Konzentration gefüllt werden kann, ohne dass hierdurch die haftvermittelnde Wirkung des Primers signifikant reduziert wird. Es soll möglich sein, Pigmente in einer so hohen Konzentration in den Primer einzuarbeiten, dass bei einem dünnschichtigen Auftrag dieses Primers auf Glas Blickdichtigkeit erzielt wird. Mit dem Begriff "dünnschichtig" ist hier eine Schichtdicke in der Größenordnung zwischen ungefähr 5 $\mu$m und 20 $\mu$m gemeint. Blickdicht heißt, dass man durch die Primerschicht nicht hindurchsehen können soll, dass also das sichtbare Licht durch die Primerschicht nicht hindurch scheinen soll.

Der Primer, insbesondere der mit Pigmenten oder Füllstoffen gefüllte Primer, soll weiterhin eine hohe Anfangsfestigkeit besitzen. Eine hohe Anfangsfestigkeit gilt als gegeben, wenn es möglich ist, unmittelbar nach dem Verdunsten des Lösemittels ein stark klebendes Klebeband auf die Primerschicht zu kleben und maximal einige Minuten danach wieder zu entfernen, gegebenenfalls unter Zerstörung des Klebebandes, ohne dabei die Primerschicht zu zerstören oder diese vom Substrat abzulösen.

Der Primer, insbesondere der mit Pigmenten oder Füllstoffen gefüllte Primer, soll weiterhin das Repositionieren eines darauf verklebten doppelseitigen Acrylatschaum-Klebebandes, das eine Klebkraft von größer 20 N/cm auf Stahl hat, ermöglichen. Das Klebeband soll dabei unmittelbar nach dem Aufkleben wieder zerstörungsfrei entfernt und an einer etwas anderen Stelle neu aufgeklebt werden können, ohne dass der Primer vom Substrat mit abgezogen wird oder kohäsiv spaltet.

Weiterhin soll ein doppelseitiges Acrylatschaum-Klebeband mit einer Klebkraft von größer 20 N/cm auf Stahl vorteilhaft spätestens 48 Stunden nach dem Aufkleben nicht mehr von der auf einer Glas- oder Keramikoberfläche aufgetragenen Primerschicht zerstörungsfrei ablösbar sein. Es soll möglichst zum Schaumspalten innerhalb des Klebebandes kommen oder zumindest zu einem gemischten Bruchbild mit teilweisem Schaumspalten.

Vorteilhaft soll der Primer, insbesondere der mit Pigmenten oder Füllstoffen gefüllte Primer eine kurze Flash-Off-Zeit besitzen. Unter Flash-Off-Zeit wird die Zeit verstanden, die nach dem Primer-Auftrag auf das Substrat, insbesondere auf Glas, vergeht, bis das Lösemittel verdunstet, der Primer also "trocken" ist.

Außerdem soll der Primer frei von halogenhaltigen, insbesondere chlorhaltigen Stoffen sein.

Gegenstand der Erfindung ist in einer ersten und allgemeinen Ausführungsform ein Primer, der eine in einem oder mehreren Lösemitteln gelöste oder dispergierte Mischung G aus

- mindestens einem Copolymerisat, erhalten durch Copolymerisation einer Monomerenmischung, umfassend zu mindestens 90 Gew.-% die folgenden Monomere:
  Vinylcaprolactam und/oder Vinylpyrrolidon und eines oder mehrere der Monomere a) und b):

    a) Acrylsäureester eines linearen, primären Alkohols mit 2 bis 10 Kohlenstoffatomen im Alkylrest des Alkohols,
    b) Acrylsäureester eines verzweigten, nichtzyklischen Alkohols mit 3 bis 12 Kohlenstoffatomen im Alkylrest des Alkohols,

- mindestens einem organofunktionellen Silan der allgemeinen Struktur (Ia) oder (Ib)

$$(R^1O\text{-})_x Si(CH_2OR^2)_y(R^3)_z \qquad (Ia)$$

$$(R^1O\text{-})_x Si(CH_2NHR^2)_y(R^3)_z \qquad (Ib),$$

worin

die Reste $R^1$ unabhängig voneinander für einen $C_1$-$C_4$-Alkylrest, einen $C_2$-$C_6$-Alkoxyalkylrest oder einen Acetylrest stehen;

die Reste $R^2$ unabhängig voneinander für einen organischen Rest stehen;
die Reste $R^3$ unabhängig voneinander für einen $C_1$-$C_{18}$-Alkylrest stehen und x = 1, 2 oder 3; y = 1, 2 oder 3; x + y ≤ 4 und z = 4 - x - y ist;

- mindestens einer Metallverbindung ausgewählt aus der Gruppe bestehend aus Metallacetylacetonaten, Metallalkoxiden und Alkoxy-Metallacetylacetonaten,
- mindestens einem Amin

umfasst.

"Vinylcaprolactam" bezeichnet N-Vinylcaprolactam (CAS-Nr. 2235-00-9) und "Vinylpyrrolidon" N-Vinyl-2-pyrrolidon (CAS-Nr. 88-12-0).

Das organofunktionelle Silan ist ein sogenanntes alpha-Silan. Darunter werden Silane mit einer Methylenbrücke statt der allgemein üblichen Propylenbrücke zwischen dem Si-Atom und der funktionellen Gruppe $OR^2$ beziehungsweise $NHR^2$ verstanden.

Unter einem Metallacetylacetonat wird erfindungsgemäß eine Koordinationsverbindung aus Acetylacetonat-Anionen und Metallkationen verstanden. Die allgemeine Formel lautet: $M(acac)_m$. M steht dabei für ein Metallkation, acac für das Acetylacetonat-Anion. Der IUPAC-Name für Acetylaceton lautet: Pentan-2,4-dion, die CAS-Nr. lautet: 123-54-6. m steht für die Anzahl der Acetylacetonat-Anionen, die zum Ladungsausgleich erforderlich sind. m hängt ab von der Oxidationsstufe des Metallkations.

Der Begriff Metallalkoxid steht synonym für "Metallalkoholat". Es handelt sich um Koordinationsverbindungen der allgemeinen Formel: $M(OR)_n$. M steht dabei für ein Metallkation, OR für ein Alkoholatanion. R steht für einen Alkylrest. n steht für die Anzahl der Alkoholatanionen, die zum Ladungsausgleich erforderlich sind. n hängt ab von der Oxidationsstufe des Metallkations.

Unter Alkoxy-Metallacetylacetonaten werden in dieser Schrift gemischte Koordinationsverbindungen sowohl aus Acetylacetonat- als auch aus Alkoholat-Anionen und Metallkationen verstanden. Die allgemeine Formel lautet: $M(acac)_m(OR)_n$. M steht dabei für ein Metallkation, acac für das Acetylacetonat-Anion, OR für ein Alkoholatanion. R steht für einen Alkylrest. m und n stehen für die Anzahl der Acetylacetonat-Anionen beziehungsweise Alkoholatanionen, die zum Ladungsausgleich erforderlich sind. m und n hängen ab von der Oxidationsstufe des Metallkations.

Das Amin kann aliphatisch oder aromatisch sein.

Erfindungsgemäße Primer weisen eine starke Haftung auf hydrophilen Substraten wie insbesondere Glas oder Keramik einerseits und zu Klebebändern, insbesondere solchen mit polaren Haftklebstoffen, beispielsweise mit Haftklebstoffen auf Basis von Polyacrylsäureester, andererseits auf. Somit sind erfindungsgemäße Primer exzellente Haftvermittler für Verklebungen von Klebebändern auf Glas und Keramik. Es wurde gefunden, dass ein auf die Primerschicht aufgeklebtes doppelseitiges Klebeband auf Acrylatschaumbasis, das eine Klebkraft von größer 20 N/cm auf Stahl besitzt, in der Regel spätestens 48 Stunden nach dem Aufkleben nicht mehr zerstörungsfrei von der Primerschicht abgelöst werden kann, wobei die Primerschicht auf eine Glas- oder Keramikoberfläche aufgetragen worden ist.

Darüber hinaus ist es möglich, den erfindungsgemäßen Primer mit Pigmenten, insbesondere Farbpigmenten wie zum Beispiel Ruß oder anderen funktionalen Füllstoffen zu füllen, ohne dass dessen haftvermittelnde Wirkung dadurch in einem anwendungstechnisch relevanten Ausmaß reduziert wird. Auch die Anfangsfestigkeit des Primers, die durch den schnellen Aufbau von sowohl Kohäsion als auch Adhäsion, insbesondere zu Glas oder Keramik, gegeben ist, wird durch den Zusatz von Pigmenten oder anderen funktionalen Füllstoffen kaum beeinträchtigt. Wie sich gezeigt hat, gilt dies auch dann, wenn die Pigmente oder anderen funktionalen Füllstoffe in einer so hohen Konzentration in der Primerschicht enthalten sind, dass die Primerschicht bei einer Auftragsstärke von ca. 5 - 20 μm auf Glas lichtundurchlässig, also blickdicht ist. Die notwendige Konzentration der Pigmente beträgt dabei je nach Pigment zwischen 20 und 200 Gew.-%, bezogen auf das Gesamtgewicht der Copolymerisate.

Erfindungsgemäße Primer ermöglichen das Repositionieren von darauf aufgeklebten, klebstarken, doppelseitigen Acrylatschaum-Klebebändern, die eine Klebkraft von größer 20 N/cm auf Stahl besitzen. Auch diese Eigenschaft wird durch eingearbeitete Pigmente oder andere funktionale Füllstoffe kaum beeinträchtigt.

Unter einem Primer wird erfindungsgemäß im Einklang mit DIN EN ISO 4618 ein Beschichtungsstoff zum Herstellen einer Grundbeschichtung verstanden. Allgemein wird ein Primer oder Beschichtungsstoff auf die Oberfläche eines Substrates aufgetragen, danach kommt es zur Filmbildung durch Verdunsten des Lösemittels und/oder durch einen anderen chemischen oder physikalischen Härtungs- oder Filmbildungsprozess, und anschließend kann auf die so hergestellte Schicht ein weiterer, anderer Stoff, zum Beispiel ein Lack, eine Farbe, ein Klebstoff oder ein Klebeband aufgebracht werden. Voraussetzung für eine haftvermittelnde Wirkung eines Primers ist, dass einerseits eine gute Haftung der Primerschicht zum Substrat, dessen Oberfläche auch als Untergrund bezeichnet wird, erzielt wird, und andererseits auf der hergestellten Primerschicht der darauf aufzubringende weitere, andere Stoff ebenfalls gut haftet. Ein Primer hat eine optimale haftvermittelnde Wirkung, wenn es beim Versuch, den auf den Primer aufgebrachten Stoff oder das auf den Primer aufgebrachte Klebprodukt abzuschälen, zum kohäsiven Versagen innerhalb des Stoffes, des Klebproduktes bzw. des Klebebandes kommt oder wenn es dabei zur Zerstörung des Substrates kommt, auf dem der Primer zuvor aufgetragen wurde. Wenn die zum Abschälen des mit Primer auf ein Substrat aufgebrachten Stoffes, Klebproduktes oder Klebebandes erforderlichen Kräfte höher sind, als sie es sind, wenn kein Primer verwendet wird, ist eine Haftverbesserung bzw. eine Verbesserung der Adhäsionskraft gegeben. Je höher die Differenz der Abschälkräfte ist, desto stärker ist die Haftverbesserung bzw. die Verbesserung der Adhäsionskraft.

Ein Lösemittel im Sinne der Erfindung ist jede bekannte Flüssigkeit, die geeignet ist, die Mischung G zu lösen oder zumindest fein zu verteilen, ohne mit den Bestandteilen dieser Mischung eine unerwünschte chemische Reaktion einzugehen. Bevorzugte erfindungsgemäße Lösemittel sind organische Lösemittel, zum Beispiel Ester, Ketone, aliphatische sowie aromatische Kohlenwasserstoffe. Besonders bevorzugt sind Lösemittel mit einem Siedepunkt von kleiner oder gleich 100°C. Ganz besonders bevorzugt sind Lösemittel, deren Siedepunkte kleiner 80°C sind, insbesondere Ethylacetat (CAS-Nr. 141-78-6) und Aceton (CAS-Nr. 67-64-1). Ebenfalls sehr bevorzugte Lösemittel sind niedermolekulare Alkohole, insbesondere Ethanol (CAS-Nr. 64-17-5) und Isopropanol (CAS-Nr. 67-63-0), auch wenn letzteres einen Siedepunkt von knapp über 80°C, nämlich 82,6°C hat.

Gemische der erfindungsgemäßen Lösemittel sind vom Erfindungsgedanken eingeschlossen. Ein besonders bevorzugtes Lösemittelgemisch besteht aus Ethylacetat, Aceton und einem oder mehreren niedermolekularen Alkoholen, insbesondere Isopropanol.

Wasser und andere anorganische Lösemittel sind ebenfalls vom Erfindungsgedanken eingeschlossen.

Unter einer dispergierten Mischung wird eine feinverteilte Mischung verstanden. Der Grad der Feinverteilung und Homogenität der Mischung wird nicht streng definiert, er muss aber ausreichend sein, dass es nach dem Beschichten zur Ausbildung einer geschlossenen Schicht kommt und die Größe der nicht auf molekularer Ebene gelösten Agglomerate und/oder Aggregate genügend gering ist, dass die Funktion der Primerschicht als haftvermittelnde Schicht gewährleistet ist.

Die im erfindungsgemäßen Primer enthaltene Mischung G umfasst bevorzugt zumindest ein Copolymerisat, das durch radikalische Copolymerisation folgender Monomere erhalten wird:

Vinylcaprolactam und/oder Vinylpyrrolidon und eines oder mehrere der folgenden Monomere a) und b):

a) Acrylsäureester eines linearen, primären Alkohols mit 2 bis 10 Kohlenstoffatomen im Alkylrest des Alkohols,
b) Acrylsäureester eines verzweigten, nichtzyklischen Alkohols mit 3 bis 12 Kohlenstoffatomen im Alkylrest des Alkohols,

wobei die Summe aus Vinylcaprolactam und Vinylpyrrolidon sowie den Monomeren a) und b) bevorzugt - bei mehreren Copolymerisaten jeweils - 100 Gew.-% des Copolymerisats ausmacht.

Bevorzugt ist das mindestens eine Copolymerisat der Mischung G des erfindungsgemäßen Primers ein Haftklebstoff. Besonders bevorzugt sind alle in der Mischung G enthaltenen Copolymerisate Haftklebstoffe.

Unter einem Haftklebstoff wird erfindungsgemäß, wie im allgemeinen Sprachgebrauch üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos($\delta$) ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin($\delta$) ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls entsprechend innerhalb dieses Fensters liegt.

Haftklebstoffe, die Vinylcaprolactam und/oder Vinylpyrrolidon im Copolymerisat enthalten, weisen üblicherweise nur durchschnittliche Klebeeigenschaften auf. Umso überraschender war es, dass im Rahmen der vorliegenden Erfindung gefunden wurde, dass ein Primer, der als Haftklebstoff ein erfindungsgemäßes Copolymerisat mit Vinylcaprolactam und/oder Vinylpyrrolidon als Monomerkomponenten enthält, herausragende haftvermittelnde Eigenschaften aufweist und eine sehr feste Bindung von Klebebändern zu hydrophilen Substraten, insbesondere Glas, herstellt.

Besonders bevorzugt ist das Copolymerisat ein Haftklebstoff, und die Monomerenmischung des Copolymerisats umfasst nur Vinylcaprolactam und/oder Vinylpyrrolidon sowie eines oder mehrere der Monomere a) und b), d.h. das Copolymerisat ist nur aus diesen Monomeren aufgebaut, ohne dass weitere copolymerisierbare Monomere enthalten sind. Ein Primer, der auf einem derartigen Copolymerisat basiert, weist besonders gute haftvermittelnde Eigenschaften auf. Darüber hinaus kann vorteilhaft auf die Anwesenheit anderer - insbesondere weich machender - Comonomere und Komponenten als den genannten verzichtet werden. So kann beispielsweise vollständig auf Comonomere mit zyklischen Kohlenwasserstoffbausteinen verzichtet werden.

Lineare Acrylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat. Bevorzugt enthält die Monomerenmischung n-Butylacrylat.

Verzweigte nichtzyklische Acrylsäureester mit 3 bis einschließlich 12 Kohlenstoffatomen im Alkylrest des Alkohols werden bevorzugt ausgewählt aus der Gruppe bestehend aus 2-Ethylhexylacrylat (EHA), 2-Propylheptylacrylat, iso-Octylacrylat, iso-Butylacrylat, isoAmylacrylat und iso-Decylacrylat. Besonders bevorzugt sind die Monomere b) ausgewählt aus der Gruppe bestehend aus 2-Ethylhexylacrylat (EHA), 2-Propylheptylacrylat und iso-Octylacrylat. "iso-Octylacrylat" bezeichnet Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können.

Das Gewichtsverhältnis (Monomere a) und b)) : (Vinylcaprolactam + Vinylpyrrolidon) beträgt bevorzugt von 95 : 5 bis 40 : 60, stärker bevorzugt von 85 : 15 bis 50 : 50, insbesondere von 80 : 20 bis 60 : 40, beispielsweise von 75 : 25 bis 65 : 35.

Sehr bevorzugt besteht die Monomerenmischung aus Vinylcaprolactam und/oder Vinylpyrrolidon und genau einem Monomer der Sorte a), wobei besonders bevorzugt als Monomer a) n-Butylacrylat gewählt wird. Als weiteres Monomer ist Vinylcaprolactam besonders bevorzugt. Insbesondere besteht die Monomerenmischung daher aus Vinylcaprolactam und n-Butylacrylat. In einer derartigen Monomerenmischung beträgt das Gewichtsverhältnis n-Butylacrylat : Vinylcaprolactam bevorzugt von 95 : 5 bis 50 : 50, stärker bevorzugt von 80 : 20 bis 60 : 40.

Erfindungsgemäß kann die Monomerenmischung bis zu 10 Gew.-%, bezogen auf das Gesamtgewicht der Monomerenmischung, weitere copolymerisierbare Monomere neben den vom Erfindungsgegenstand ohnehin umfassten Monomeren enthalten. Als solche weiteren copolymerisierbaren Monomere können ohne besondere Einschränkung alle dem Fachmann bekannten radikalisch polymerisierbaren C=C-Doppelbindungs-haltigen Monomere oder Monomergemische verwendet werden. Beispielhaft können die weiteren Monomere ausgewählt sein aus der Gruppe bestehend aus: Methylacrylat, Methylmethacrylat, Ethylmethacrylat, Benzylacrylat, Benzylmethacrylat, Phenylacrylat, Phenylmethacrylat, Isobornylacrylat, Isobornylmethacrylat, t-Butylphenylacrylat, t-Butylphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxy-ethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, , Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl) acrylamid, weiterhin N,N-Dialkylsubstituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylpyridin, 4-Vinylpyridin, N-Vinylphthalimid, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht MW von 4000 bis 13000 g/mol), Poly(Methylmethacrylat)ethylmethacrylat (MW von 2000 bis 8000 g/mol).

Vorzugsweise enthält die Monomerenmischung des Copolymerisats des erfindungsgemäßen Primers maximal 50 Gew.-%, besonders bevorzugt maximal 40 Gew.-% Vinylcaprolactam und Vinylpyrrolidon, bezogen auf das Gesamtgewicht der Monomerenmischung. Ebenfalls bevorzugt enthält die Monomerenmischung vorzugsweise mindestens 10 Gew.-%, besonders bevorzugt mindestens 15 Gew.-%, insbesondere mindestens 20 Gew.-% Vinylcaprolactam und/oder Vinylpyrrolidon, bezogen auf das Gesamtgewicht der Monomerenmischung. Ganz besonders bevorzugt beträgt die Summe der Gewichtsanteile von Vinylcaprolactam und Vinylpyrrolidon an der Monomerenmischung 10 bis 50 Gew.-%, bezogen auf das Gesamtgewicht der Monomerenmischung.

Das Monomerengemisch enthält bevorzugt maximal 1 Gew.-%, besonders bevorzugt maximal 0,1 Gew.-%, bezogen auf das Gesamtgewicht der Monomerenmischung, Acrylsäure. Insbesondere ist die Monomerenmischung frei von Acrylsäure.

Bevorzugt beträgt der Anteil des Copolymerisats beziehungsweise der Gesamtheit aller Copolymerisate der Mischung G, bezogen auf das Gesamtgewicht des Primers, 1 bis 30 Gew.-%, besonders bevorzugt 2 bis 20 Gew.-%, insbesondere 3 bis 10 Gew.%.

In dem organofunktionellen Silan der allgemeinen Struktur (Ia) beziehungsweise (Ib) stehen die Reste $R^1$ unabhängig voneinander bevorzugt für einen Methyl-, Ethyl-, 2-Methoxyethyl- oder einen Acetylrest, besonders bevorzugt für einen Methyl- oder Ethylrest. Die Reste $R^3$ stehen unabhängig voneinander bevorzugt für einen Methyl-, Isooctyl-, Hexadecyl- oder einen Cyclohexylrest. Der Rest $R^2$ steht bevorzugt für einen Cyclohexyl-, Methacryloyl- oder einen Alkoxycarbonyl-Rest. Stärker bevorzugt ist das organofunktionelle Silan N-Cyclohexylamino-methyltriethoxysilan (CAS-Nr.: 26495-91-0), Methacryloxymethyl-methyldimethoxysilan (CAS-Nr.: 121177-93-3), Methacryloxymethyltrimethoxysilan (CAS-Nr.: 54586-78-6), N-trimethoxysilylmethyl-O-methylcarbamat (CAS-Nr. 23432-64-6) oder N-Dimethoxy(methyl)silyl-methyl-O-methylcarbamat (CAS-Nr.: 23432-65-7). Besonders bevorzugt ist das organofunktionelle Silan N-Dimethoxy(methyl)silyl-methyl-O-methylcarbamat (CAS-Nr.: 23432-65-7).

Synonyme für "Alkoxy-Metallacetylacetonat" sind Metallalkoxidacetylacetonat oder Metallacetylacetonatalkoxid. Die Metallverbindung darf erfindungsgemäß noch weitere Liganden tragen, ohne den Erfindungsgedanken zu verlassen.

Das Metall ist bevorzugt ausgewählt aus der Gruppe bestehend aus Titan, Aluminium, Zirkonium, Zink und Eisen; insbesondere ist das Metall Titan oder Zirkonium. Besonders bevorzugt ist die Metallverbindung ausgewählt aus Titan- oder Zirkoniumalkoxiden. Ganz besonders bevorzugt ist die Metallverbindung Titantetraisopropanolat Ti($i$Pr)$_4$.

Das Amin enthält bevorzugt keine weiteren funktionellen Gruppen, insbesondere keine Si-O-Alkylgruppe. Es ist also bevorzugt nicht gleichzeitig ein Silan. Bevorzugt ist das Amin ein primäres Amin, insbesondere ein Diamin, in dem beide Aminogruppen primär sind.

Der Gewichtsanteil der Gesamtheit aller Metallverbindungen an der Mischung G ist vorzugsweise größer als der Gewichtsanteil der Gesamtheit aller Amine, besonders bevorzugt mindestens 10mal größer.

Ein erfindungsgemäßer Primer kann über die bisher genannten Substanzen hinaus weitere Bestandteile enthalten, beispielsweise Additive wie andere Polymere, Harze, Weichmacher, Stabilisatoren, rheologische Additive, Füllstoffe, Pigmente, Vernetzer, Initiatoren, Katalysatoren, Beschleuniger und dergleichen.

Auch Isocyanate können vorteilhaft zugemischt werden, obwohl eine sofortige Reaktion mit anderen Inhaltsstoffen des Primers erwartet werden kann. Besonders vorteilhaft kann dem erfindungsgemäßen Primer während seiner Herstellung Tosylisocyanat (CAS-Nr. 4083-64-1) zugemischt werden. Der Anteil des Isocyanats beträgt bevorzugt 1 bis 10 Gew.-%, besonders bevorzugt 2 bis 8 Gew.-%, bezogen auf das Gesamtgewicht des Primers.

Bevorzugt ist der erfindungsgemäße Primer frei von anderen Polymeren als dem/den Copolymerisat(en) der Mischung G, insbesondere von chlorierten Polyolefinen.

Bevorzugt enthält der erfindungsgemäße Primer keine Blockcopolymere des Typs Polystyrol/ Polydien oder Polystyrol/ hydriertes Polydien. Unter Blockcopolymeren des Typs Polystyrol/ Polydien oder Polystyrol/ hydriertes Polydien sind im Sinne dieser Schrift alle Polymere zu verstehen, deren Moleküle aus verknüpften Blöcken aus Polystyrol- und Polydien-Einheiten oder hydrierten oder teilhydrierten Polydien-Einheiten bestehen oder solche Blöcke zumindest zu wesentlichen Anteilen enthalten. Typische Beispiele für Polydien- sowie hydrierte oder teilhydrierte Polydien-Einheiten sind Polybutadien-, Polyisopren-, polymerisierte Ethylen-/Butylen- und Ethylen-/Propylen-Blöcke. Überraschend wurde gefunden, dass Blockcopolymere des Typs Polystyrol/ Polydien oder Polystyrol/ hydriertes Polydien den Nachteil haben, als zusätzlicher Bestandteil im erfindungsgemäßen Primer die Haftung des Primers zu hydrophilen Oberflächen wie insbesondere Glas oder Keramik zu verschlechtern, verglichen mit einem erfindungsgemäßen Primer ohne diesen zusätzlichen Bestandteil. Zudem erfordert der Zusatz von Blockcopolymeren des Typs Polystyrol/ Polydien oder Polystyrol/ hydriertes Polydien zum erfindungsgemäßen Primer ein anderes, weniger polares Lösemittel oder Lösemittelgemisch, als es ohne diesen Zusatz notwendig wäre. Insbesondere ist der Zusatz von Toluol oder Benzin notwendig, um eine homogene Primerlösung zu erhalten. Diese Lösemittel haben aber einen vergleichsweise hohen Siedepunkt, so dass der Wunsch nach einer kurzen Trocknungszeit (Flash-Off-Zeit) des Primers damit nicht erfüllt werden kann.

Ebenfalls bevorzugt ist der erfindungsgemäße Primer frei von Epoxidharzen.

Der erfindungsgemäße Primer enthält bevorzugt einen oder mehrere fluoreszierende optische Aufheller. Dies ist vorteilhaft, weil sich auf diese Weise ein geprimerter Untergrund kenntlich machen lässt. Ohne optische Kenntlichmachung ist es häufig schwer, einen geprimerten Untergrund von einem nicht geprimerten Untergrund zu unterscheiden, da die Auftragsstärke eines Primers in der Regel sehr dünn und somit optisch kaum wahrnehmbar ist. Ein bevorzugter fluoreszierender optischer Aufheller ist 2,5-Thiophendiylbis(5-tert-butyl-1,3-benzoxazol), CAS-Nr. 7128-64-5, kommerziell erhältlich unter dem Handelsnamen Tinopal OB®.

Bevorzugt beträgt die Summe der Gewichtsanteile der Mischung G und der Lösemittel am erfindungsgemäßen Primer mindestens 80 %, stärker bevorzugt mindestens 85 %, insbesondere mindestens 90 %, beispielsweise mindestens 92 % und ganz besonders bevorzugt mindestens 95 %.

Ein erfindungsgemäßer Primer enthält bevorzugt die folgenden Komponenten in den angegebenen Anteilen, jeweils bezogen auf das Gesamtgewicht des Primers:

| | |
|---|---|
| - Copolymerisat(e) | 3 bis 9 Gew.-% |
| - Lösemittel | 65 bis 90 Gew.-% |
| - Silan(e) der Struktur (Ia) oder I(b) | 0,5 bis 7 Gew.-% |
| - Metallverbindung(en) | 5 bis 17 Gew.-% |
| - Amin(e) | 0,1 bis 2,0 Gew.-% |
| - Additive | 0 bis 10 Gew.-%, |

wobei sich die Anteile zu 100 Gew.-% addieren.

Ein weiterer Gegenstand der Erfindung ist die Verwendung eines erfindungsgemäßen Primers zur Herstellung einer haftvermittelnden Schicht, bevorzugt zur Herstellung einer Pigmente und/oder andere funktionale Füllstoffe enthaltenden, haftvermittelnden Schicht, besonders bevorzugt einer Ruß enthaltenden, haftvermittelnden Schicht, insbesondere einer blickdicht schwarz eingefärbten haftvermittelnden Schicht.

Ein weiterer Gegenstand der Erfindung ist ein Verfahren zum Herstellen einer haftvermittelnden Schicht auf einem Substrat, welches das Aufbringen eines erfindungsgemäßen Primers auf ein Substrat und das Entfernen des einen oder der mehreren Lösemittel umfasst.

Erfindungsgemäße Primer haben eine exzellente Haftung auf hydrophilen Substraten, insbesondere Glas, aber auch auf vielen anderen hydrophilen Oberflächen wie zum Beispiel Keramik. Klebebänder mit polaren Haftklebstoffen, insbesondere mit Haftklebstoffen auf Basis von Copolymerisaten aus Acrylsäureestern und Acrylsäure, aber auch andere Klebebänder, haften ausgezeichnet auf einem erfindungsgemäßen Primer. Die exzellente Haftung zeigt sich darin, dass das Klebeband nach einer gewissen Aufziehzeit (in der Regel spätestens 48 Stunden nach dem Aufkleben des Klebebandes auf den ausgestrichenen und getrockneten Primer) überwiegend nur noch unter Zerstörung, das heißt unter Spaltung des Haftklebstoffs des Klebebandes oder unter Ablösung des Haftklebstoffs vom Träger des Klebebandes oder unter Schaumspaltung, falls es sich um ein Klebeband auf Basis eines Acrylatschaums gehandelt hat, ablösbar ist. Unter dem Begriff "Aufziehen" versteht der Fachmann dabei die Erhöhung der Verklebungsfestigkeit bei Lagerung eines Klebeverbundes aus Substrat, in diesem Fall geprimertem Substrat und Klebeband.

Auch die Anfangsfestigkeit (Green Strength) der erfindungsgemäßen Primer ist überraschend sehr hoch. Unter der Anfangsfestigkeit wird die Festigkeit verstanden, die der Primer kurze Zeit nach dem Verdunsten des Lösemittels besitzt. "Kurze Zeit" bedeutet hier maximal 240 Sekunden. Unter der Festigkeit wird hier die kombinierte Festigkeit von sowohl innerer Festigkeit des Primers (Kohäsion) als auch Haftfestigkeit (Adhäsion) zum Substrat verstanden. Sowohl Adhäsion als auch Kohäsion des ausgestrichenen und getrockneten Primers sind so hoch, dass ein unmittelbar nach dem Verdunsten des Lösemittels auf die somit erzeugte Primerschicht aufgeklebtes, stark klebendes Klebeband wieder entfernt, also abgezogen werden kann, gegebenenfalls unter Zerstörung des Klebebandes durch Spaltung desselben, ohne dabei die Primerschicht zu zerstören oder diese vom Substrat abzulösen. Als stark klebendes Klebeband kann beispielsweise ein einseitig klebendes Gewebeklebeband mit einer Klebkraft von größer als 4 N/cm auf Stahl angesehen werden oder ein doppelseitiges Klebeband auf Acrylatschaumbasis, das eine Klebkraft von größer 20 N/cm auf Stahl besitzt.

Es hat sich gezeigt, dass erfindungsgemäße Primer das Repositionieren eines auf die Primerschicht aufgeklebten, doppelseitigen Klebebandes auf Acrylatschaumbasis, das eine Klebkraft von größer 20 N/cm auf Stahl besitzt, ermöglichen. Das Klebeband kann dabei unmittelbar nach dem Aufkleben wieder zerstörungsfrei entfernt werden und an etwas anderer oder auch gleicher Stelle neu aufgeklebt werden, ohne dass der Primer vom Substrat mit abgezogen wird oder kohäsiv spaltet. Das Repositionieren eines Klebebandes ist notwendig, wenn es nicht korrekt positioniert war, nicht vollflächig in Kontakt mit der Substratoberfläche stand oder ein sonstiger Verklebungsfehler vorlag. Das zerstörungsfreie Entfernen unmittelbar nach dem Aufkleben des Klebebandes ist allerdings nur dann möglich, wenn der Primer genügend ausgehärtet ist. Dies ist in der Regel nach spätestens 240 Sekunden der Fall und hängt ab von der genauen Primerzusammensetzung und dem Alter der verwendeten Primerlösung. Anders als bei der Beurteilung der Anfangsfestigkeit wird hier das Klebeband nicht sofort nach dem Verdunsten des Lösungsmittels auf die Primerschicht geklebt sondern nach dieser Aushärtezeit von in der Regel maximal 240 Sekunden ab dem Zeitpunkt des vollständigen Verdunsten des Lösemittels. Ebenfalls anders als bei der Beurteilung der Anfangsfestigkeit wird hier das Klebeband wie oben bereits ausgeführt sofort wieder abgezogen.

Erfindungsgemäße Primer haben in einer vorteilhaften Ausführungsform eine kurze Flash-Off-Zeit (Trocknungszeit). Diese beträgt in der Regel maximal 60 Sekunden, meist maximal 40 Sekunden, sofern als Lösemittel ausschließlich solche mit einem Siedepunkt von kleiner oder gleich 100°C, bevorzugt kleiner 80°C, verwendet werden und die Schichtdicke des getrockneten Primers zwischen ungefähr 5 $\mu$m und 20 $\mu$m beträgt.
Besonders kurze Flash-Off-Zeiten werden mit Lösemittelgemischen bestehend aus Ethylacetat, Aceton und Isopropanol oder Ethanol erzielt.

Erfindungsgemäße Primer ließen sich auch so einstellen, dass sich ein Klebeband nach mehrwöchigen Feuchtwärmelagerungen oder Klimawechsellagerungen (Temperaturen von 60 ° bis 90 °C bei gleichzeitiger relativer Luftfeuchtigkeit von größer oder gleich 80 %) des Klebverbundes aus dem mit dem Primer beschichteten Untergrund und dem darauf aufgeklebten Klebeband überwiegend nur unter Zerstörung des Klebebandes ablösen lässt.

Überraschenderweise wurde im Rahmen der vorliegenden Erfindung gefunden, dass die genannten Eigenschaften der erfindungsgemäßen Primer nicht in einem anwendungstechnisch relevanten Maße reduziert werden, wenn den Primern Farbpigmente, insbesondere Ruß, oder andere funktionale Füllstoffe, insbesondere Mineralfüllstoffe, beigefügt werden. Dies gilt insbesondere für die Haftung auf hydrophilen Substraten, wie zum Beispiel Glas oder Keramik, die Haftung von Klebebändern auf den ausgestrichenen und getrockneten Primerschichten, die Anfangsfestigkeit, das Repositionieren eines auf die Primerschicht aufgeklebten Klebebandes sowie die Flash-Off-Zeit.

Auch wenn Farbpigmente oder andere funktionale Füllstoffe in einer so hohen Konzentration in der Primerschicht enthalten sind, dass die Primerschicht bei einer Auftragsstärke von ca. 5 - 20 $\mu$m auf Glas lichtundurchlässig, also blickdicht ist, werden die genannten Eigenschaften der erfindungsgemäßen Primer nicht in einem anwendungstechnisch relevanten Maße reduziert.

Die notwendige Konzentration der Pigmente beträgt dabei je nach Pigment zwischen 20 und 200 Gew.-%, bezogen auf das Gesamtgewicht der Copolymerisate. Die Klebebänder haften auch mit dieser Farbpigment- oder Füllstoffkonzentration im Primer noch so gut, dass es spätestens nach einer Aufziehzeit von 24 Stunden beim Abschälversuch bei Verklebungen auf Glas oder Keramik zum kohäsiven Versagen innerhalb des Klebebandes kommt.

Es ist möglich, erfindungsgemäße Primer mit bestimmten Funktionalitäten auszustatten, wenn nämlich funktionale Füllstoffe verwendet werden. So kann der Primer nicht nur wie beschrieben eingefärbt werden, wenn Farbpigmente wie zum Beispiel Ruß oder Titandioxid zugesetzt werden, sondern der Primer kann ferner auch elektrisch oder thermisch leitfähig gemacht werden, wenn z.B. Metallpartikel zugesetzt werden. Auch kann der Primer durch die Wahl des Füllstoffs in seinem pH-Wert eingestellt werden, wodurch zum Beispiel durch Verwendung von Calciumoxid eine antibakterielle Wirkung erzeugt werden kann. Auch rheologisch wirksame Füllstoffe wie zum Beispiel pyrogene Kieselsäuren können verwendet werden, so dass auch relativ dicke, formstabile Primerschichten erzeugt werden können. Weiterhin ist es möglich, durch einen hohen Anteil an preisgünstigen Mineralfüllstoffen, wie zum Beispiel Kreide, die Kosten für den Primer zu senken, ohne dass die Leistungsfähigkeit messbar beeinträchtigt wird.

Dies eröffnet ein großes Spektrum an neuen Einsatzmöglichkeiten für Primer. So können Eigenschaften, die bislang durch einen Klebstoff verwirklicht werden mussten, wie eine Einfärbung, jetzt durch den Primer abgedeckt werden, was wiederum den Vorteil mit sich bringt, dass geringere Ansprüche an das Klebstoffsystem zu stellen sind.

Die Herstellung einer haftvermittelnden Schicht mit dem erfindungsgemäßen Primer erfolgt in bekannter Weise, indem nämlich auf einem Substrat zunächst der Primer aufgebracht wird. Im Anschluss lässt man das oder die Lösemittel verdunsten, woraufhin das Klebeband appliziert werden kann. Zwischen Aufbringen/Verdunsten des Lösemittels und der Applikation des Klebebandes können nur wenige Minuten, aber auch einige Tage oder Wochen liegen.

Beispielteil

Die folgenden Prüfmethoden wurden eingesetzt, um die erfindungsgemäß hergestellten Muster zu charakterisieren:

Dynamisch Mechanische Analyse (DMA) zur Bestimmung des Speichermoduls G' und des Verlustmoduls G"

Zur Charakterisierung der Haftklebrigkeit der im Primer enthaltenen Copolymerisate erfolgten Bestimmungen des Speichermoduls G' und des Verlustmoduls G" mittels Dynamisch Mechanischer Analyse (DMA). Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmodul G" wurden im Frequenzsweep von $10^{-1}$ bis $10^2$ rad/sec bei einer Temperatur von 23 °C bestimmt. G' und G" sind folgendermaßen definiert:

$$G' = \tau/\gamma \cdot \cos(\delta) \quad (\tau = \text{Schubspannung}, \gamma = \text{Deformation}, \delta = \text{Phasenwinkel} =$$
$$\text{Phasenverschiebung zwischen Schubspannungs- und Deformationsvektor)}.$$

$$G'' = \tau/\gamma \cdot \sin(\delta) \quad (\tau = \text{Schubspannung}, \gamma = \text{Deformation}, \delta = \text{Phasenwinkel} =$$
$$\text{Phasenverschiebung zwischen Schubspannungs- und Deformationsvektor)}.$$

Die Definition der Winkelfrequenz lautet: $\omega = 2\pi \cdot f$ (f = Frequenz). Die Einheit ist rad/sec.

Die Dicke der gemessenen haftklebrigen Copolymerisat-Proben betrug stets zwischen 0,9 und 1,1 mm (1 +/- 0,1 mm). Die haftklebrigen Copolymerisat-Proben wurden hergestellt, indem die weiter unten beschriebenen Copolymerisate auf einer beidseitig silikonisierten Polyesterfolie (Trennliner) ausgestrichen wurden, das Lösungsmittel bei 70° C abgedampft wurde und die so erhaltenen 100 $\mu$m dicken Ausstriche so oft aufeinandergelegt wurden, bis eine Dicke von ca. 1 mm erreicht war. Der Probendurchmesser betrug jeweils 25 mm. Die Vorspannung erfolgte mit einer Belastung von 3N. Der Stress der Probenkörper betrug bei allen Messungen 2500 Pa.

Schaumspalten

Die Zeit, bis es zum Schaumspalten kommt, wurde durch wiederholte Klebkraftmessungen mit den weiter unten beschriebenen Acrylatschaum-Testklebebändern 1 bis 4 in Anlehnung an PSTC-101 nach festgelegten Zeiten bei Raumtemperatur bestimmt. Nach dieser Methode wurde zunächst der Primer auf das Substrat (den Untergrund) dünn aufgetragen.

Dies erfolgte mit einem Pinselaufstrich des Primers auf das Substrat. Nach dem Abdunsten des Lösemittels wurde ein 7 bis 25 mm breiter Streifen des Klebebandes auf den nunmehr mit dem Primer in einer Schichtdicke von ungefähr 5 $\mu$m bis 20 $\mu$m versehenen Untergrund aufgebracht (aufgeklebt). Der aufgeklebte Streifen wurde anschließend maschinell zehn Mal von einer 5 kg Stahlrolle überrollt.

Die Zeit zwischen dem letzten Überrollen des Klebebandes und dem Abziehen betrug: a) 15 Minuten, b) 30 Minuten, c) 1 Stunde, d) 12 Stunden, e) 24 Stunden, f) 48 Stunden. Der Abzugswinkel betrug jeweils 90°, die Abzugsgeschwindigkeit 300 mm/min. Ermittelt wurde, ab wann es beim Abziehen des Klebebandes zum Schaumspalten kommt. Die Klebkraft war zu diesem Zeitpunkt stets höher als 20 N/cm. Die gemessenen Klebstreifen waren mit einer 23 $\mu$m dicken, mit Trichloressigsäure angeätzten Polyesterfolie rückseitenverstärkt. Alle Messungen wurden in einem klimatisierten Raum bei 23 °C und 50 % relativer Luftfeuchte durchgeführt. Als Substrat dienten Glasplatten und Keramikkacheln.

Klimalagerungen

Die Verbunde aus den mit dem erfindungsgemäßen Primer beschichteten Substraten und den darauf aufgeklebten, weiter unten beschriebenen Acrylatschaum-Testklebebändern 1 bis 4 wurden Lagerungen bei ausgewählten klimatischen Bedingungen unterworfen, um die klimatische Belastbarkeit der Verklebung zu ermitteln.

Lagerung a): zweiwöchige Lagerung in einem Klima von 85 °C und 85% relative Luftfeuchtigkeit;
Lagerung b): zweiwöchige Klimawechsellagerung mit den Zyklen 4 Stunden -40 °C, 4 Stunden Aufheizen / Abkühlen, 4 Stunden 80°C/80% relative Luftfeuchtigkeit.

Nach Ablauf der Lagerzeit wurden die mit einer 23 $\mu$m dicken, mit Trichloressigsäure angeätzten Polyesterfolie rückseitenverstärkten Proben der Klebkraftprüfung bei einem Abzugswinkel von jeweils 90° und einer Abzugsgeschwindigkeit von 300 mm/min in einem klimatisierten Raum bei 23 °C und 50 % relativer Luftfeuchte unterzogen. Ermittelt wurde die Art des Versagens der Klebverbindung. Die Klebkraft war dabei stets höher als 20 N/cm.

Transmissionsmessung mit UV/VIS-Spektrometer

Die Messung der Lichttransmission erfolgte mit dem UV/VIS-Spektrometer UVIKON 923 der Firma Kontron im Wellenlängenbereich von 190 bis 850nm.

Statische Glasübergangstemperatur

Die Bestimmung der statischen Glasübergangstemperatur erfolgt über Dynamische Differenzkalorimetrie nach DIN 53765. Die Angaben zur Glasübergangstemperatur $T_g$ beziehen sich auf den Glasumwandlungstemperatur-Wert $T_g$ nach DIN 53765:1994-03, sofern im Einzelfall nichts anderes angegeben ist. Aufheizkurven laufen mit einer Heizrate von 10 K/min. Die Muster werden in Al-Tiegeln mit gelochtem Deckel und Stickstoffatmosphäre vermessen. Es wird die zweite Aufheizkurve ausgewertet. Eine Glasübergangstemperatur ist als Wendepunkt im Thermogramm erkennbar.

Molekulargewichte

Die Bestimmung des mittleren Molekulargewichtes $M_W$ beziehungsweise des mittleren Molekulargewichtes $M_N$ und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, 103 Å (10-7 m), ID 8,0 mm x 50 mm verwendet. Zur Auftrennung wurden die Säulen PSS-SDV, 5 $\mu$m, 103 Å (10-7 m), 105 Å (10-5 m) und 106 Å (10-4 m) mit jeweils ID 8,0 mm $\times$ 300 mm eingesetzt. Die Probenkonzentration betrug 4 g/l, die Durchflussmenge 1,0 ml pro Minute. Es wurde gegen PMMA-Standards gemessen.

Feststoffgehalt

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER)

Der K-Wert ist ein Maß für die durchschnittliche Molekülgröße hochpolymerer Stoffe. Zur Messung wurden einprozentige (1g/100 ml) toluolische Polymerlösungen hergestellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.).

Flash-Off Zeit

Die Flash-Off Zeit ist die Zeit, die nach dem Primer-Auftrag auf das Substrat vergeht, bis das Lösemittel verdunstet, der Primer also "trocken" ist. Die Messung erfolgt, indem der Primer bei 23°C mit einem Pinsel in einer Schichtdicke von 5 bis 10 $\mu$m auf eine Glasplatte aufgetragen wird und anschließend die Zeit gemessen wird, bis das Lösemittel verdunstet ist. Dieser Zeitpunkt wird optisch bestimmt. Er ist daran zu erkennen, dass die Primerschicht ihren durch das Lösemittel bedingten Glanz verliert.

Anfangsfestigkeit

Die Anfangsfestigkeit ist die Festigkeit, die der Primer kurze Zeit nach dem Verdunsten des Lösemittels besitzt. Unter der Festigkeit wird hier die kombinierte Festigkeit von sowohl innerer Festigkeit des Primers (Kohäsion) als auch Haftfestigkeit (Adhäsion) zum Substrat verstanden. Die Anfangsfestigkeit wird bestimmt, indem der Primer zunächst analog wie bei der Bestimmung der Flash-Off Zeit auf Glas appliziert wird. Unmittelbar nach dem Verdunsten des Lösemittels wird das weiter unten beschriebene Testklebeband 5 auf die somit erzeugte Primerschicht aufgeklebt und kurz von Hand leicht angedrückt. Anschließend wird das Klebeband nach 15 Sekunden und in weiteren analogen Versuchen nach 30 Sekunden, 60 Sekunden, 90 Sekunden und 120 Sekunden, 180 Sekunden und 240 Sekunden wieder von Hand abgezogen. Die Anfangsfestigkeit ist in ausreichender Höhe erreicht, wenn beim Abziehen des Klebebandes keine Primerrückstände auf dem Klebeband sichtbar sind oder das Klebeband kohäsiv spaltet.

Repositionierbarkeit

Die Repositionierbarkeit ist gegeben, wenn ein auf die getrocknete Primerschicht aufgeklebtes Klebeband unmittelbar nach dem Aufkleben wieder zerstörungsfrei entfernt werden kann, ohne dass der Primer vom Substrat mit abgezogen wird oder kohäsiv spaltet. Die Prüfung erfolgte mit den weiter unten beschriebenen doppelseitigen Acrylatschaum-Testklebebändern 1 bis 4, die jeweils eine Klebkraft von größer 20 N/cm auf Stahl haben. Der Test erfolgt, indem der Primer zunächst analog wie bei der Bestimmung der Flash-Off Zeit auf Glas appliziert wird. Unmittelbar nach dem Verdunsten des Lösemittels beginnt die Zeitmessung. Die doppelseitigen Acrylatschaum-Testklebebänder werden nach 15 Sekunden und in weiteren analogen Versuchen nach 30 Sekunden, 45 Sekunden, 60 Sekunden, 90 Sekunden, 120 Sekunden, 180 Sekunden und 240 Sekunden auf die somit erzeugte Primerschicht aufgeklebt, kurz von Hand leicht angedrückt und sofort wieder abgezogen. Die Repositionierbarkeit ist gegeben, wenn beim Abziehen des Klebebandes keine Primerrückstände auf dem Klebeband sichtbar sind.

Folgende Substrate (Untergründe, auf die zunächst der Primer aufgetragen und darauf anschließend das Klebeband aufgeklebt wurde) wurden verwendet:

a) Glasprüfkörper (Firma Rocholl GmbH)

b) Keramikkachel (Baumarkt)

Die nicht kommerziell erhältlichen Testklebebänder (Testklebebänder 1, 2 und 3), mit denen der Primer geprüft wurde, basierten auf Polyacrylat- und Polyacrylat/ Synthesekautschuk-Haftklebstoffen. Zur Herstellung dieser Haftklebstoffe wurden die folgenden Rohstoffe verwendet:

| Chemische Verbindung | Handelsname | Hersteller oder Lieferant | CAS-Nr. |
|---|---|---|---|
| Bis-(4-tert-butylcyclohexyl)peroxydicarbonat | Perkadox®16 | Akzo Nobel | 15520-11-3 |
| 2,2'-Azobis(2-methylpropionitril), AIBN | Vazo®64 | DuPont | 78-67-1 |
| 2,2'-Azobis(2-methylbutyronitrile) | Vazo®67 | DuPont | 13472-08-7 |
| Pentaerythrittetraglycidether | Polypox®R16 | UPPC AG | 3126-63-4 |
| 3,4-Epoxycyclohexylmethyl-3,4-epoxycyclohexancarboxylat | Uvacure®1500 | Cytec Industries Inc. | 2386-87-0 |
| Triethylentetramin | Epikure®925 | Hexion Speciality Chemicals | 112-24-3 |
| Mikroballons (MB) (trocken-unexpandierte Mikrosphären, Durchmesser 9 bis 15 $\mu$m, Expansions-Starttemperatur 106 bis 111 °C, TMA-Dichte $\leq$ 25 kg/m$^3$) | Expancel®051 DU 40 | Expancel Nobel Industries | |
| Terpenphenolharz (Erweichungspunkt 110 °C; $M_w$ = 500 bis 800 g/mol; D = 1,50) | Dertophene®T110 | DRT resins | 25359-84-6 |
| Terpenphenolharz (Erweichungspunkt 105 °C; $M_w$ = 500 bis 800 g/mol) | Dertophene T105 | DRT resins | 25359-84-6 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |

(fortgesetzt)

| Chemische Verbindung | Handelsname | Hersteller oder Lieferant | CAS-Nr. |
|---|---|---|---|
| Styrol-Butadien-Block-Copolymer (ca. 31% Polystyrol-Anteil) | Kraton D1118 | Kraton Polymers | 9003-55-8 |
| Polyoxyethylen(15)kokosamin | Ethomeen C/25 | Akzo Nobel | 61791-14-8 |
| Reofos RDP | Tetraphenylresorcinol bis(diphenylphosphat) | Chemtura | 57583-54-7 |

Die Expansionsfähigkeit der Mikroballons kann durch die Bestimmung der TMA-Dichte [kg/m³] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur $T_{max}$ unter Normaldruck, bevor die Mikroballons kollabieren.

Die Bestimmung des Erweichungspunktes der Harze erfolgt nach DIN ISO 4625.

Weiterhin wurden die folgenden Lösemittel zur Herstellung der in den nicht kommerziell erhältlichen Testklebebändern enthaltenen Polyacrylat-Haftklebstoffe verwendet:

| Bezeichnung | CAS-Nr. | Hersteller |
|---|---|---|
| Spezialbenzin 60/95 | 64742-49-0 | Shell, Exxon |
| Aceton | 67-64-1 | Shell |
| Isopropanol | 67-63-0 | Shell |

Testklebeband 1

Ein beispielhafter Polyacrylat-Haftklebstoff 1 zur Herstellung des Testklebebandes 1 wurde wie folgt hergestellt: Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/Isopropanol (94:6) befüllt. Nach 45minütiger Durchleitung von Stickstoffgas unter Rühren wurde der Reaktor auf 58 °C hochgeheizt und 40 g Vazo 67, gelöst in 400 g Aceton, hinzugegeben.

Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.

Nach 5h sowie nach 7 h wurde jeweils mit 120 g Bis-(4-tert-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde in einem Aufkonzentrationsextruder bei Unterdruck vom Lösemittel befreit (Restlösemittelgehalt ≤ 0,3 Masseprozent). Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von $T_g$ = - 35,6 °C.

Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun das geschmolzene Harz Dertophene T 110 zugegeben, so dass eine Konzentration des Harzes in der Schmelze von 28,3 Masseprozent entstand. Weiterhin wurde der Vernetzer Polypox R16 hinzugefügt. Seine Konzentration in der Schmelze betrug 0,14 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 0,7 Masseprozent. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand ein geschäumter Polyacrylat-Haftklebstoff, welcher anschließend mittels eines Walzenkalanders bahnförmig in einer Dicke von 0,8 mm ausgeformt und mit einer beidseitig silikonisierten Trennfolie (50 μm Polyester) eingedeckt wurde, währenddessen die chemische Vernetzungsreaktion voran schritt. Der aufgewickelte Film wurde vier Wochen bei Raumtemperatur gelagert, bevor er weiter für die Primerprüfung verwendet wurde. Der aufgewickelte Film ist das Testklebeband 1.

Testklebeband 2

Ein beispielhafter Polyacrylat-Haftklebstoff 2A zur Herstellung der mittleren Schicht des dreischichtigen Testklebebandes 2 wurde wie folgt hergestellt:
Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-tert-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-tert-butylcyclohexyl)per-oxydicarbonat, gelöst in 500 g Aceton, zugegeben und das Heizbad auf eine Temperatur von 60 °C eingeregelt.
Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von $M_w$ = 1 370 000 g/mol, eine Polydispersität von D ($M_w/M_n$) = 17,13 und eine statische Glasübergangstemperatur von $T_g$ = - 38.0 °C.
Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun der Vernetzer Polypox R16 hinzugefügt. Seine Konzentration in der Schmelze betrug 0,22 Masseprozent. Alle Komponenten wurden zu einer homogenen Polymerschmelze gemischt.
Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 2,0 Masseprozent. Die entstandene Schmelzmischung wurde in eine Düse überführt.
Nach Verlassen der Düse, also nach Druckabfall, expandierten die eingearbeiteten Mikroballons, wobei durch den Druckabfall eine scherungsfreie Abkühlung der Polymermasse erfolgte. Es entstand der geschäumte Polyacrylat-Haftklebstoff 2A, welcher anschließend mittels eines Walzenkalanders bahnförmig in einer Dicke von 0,8 mm ausgeformt und mit einer beidseitig silikonisierte Trennfolie (50 μm Polyester) eingedeckt wurde, währenddessen die chemische Vernetzungsreaktion voran schritt. Der aufgewickelte Film wurde vor der Weiterverarbeitung (siehe unten) einen Tag bei Raumtemperatur gelagert.
Ein beispielhafter Polyacrylat-Haftklebstoff 2B zur Herstellung der beiden äußeren Schichten des dreischichtigen Testklebebandes 2 wurde wie folgt hergestellt:
Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Masseprozent des Vernetzers Uvacure® 1500 abgemischt, auf einen Feststoffgehalt von 30 % mit Aceton verdünnt und dann aus Lösung auf eine beidseitig silikonisierte Trennfolie (50 μm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Die Dicke betrug 50 μm. Der aufgewickelte Film wurde zwei Tage bei Raumtemperatur gelagert, bevor er weiter für die Herstellung des Testklebebandes 2 verwendet wurde.
Auf den geschäumten Film des Polyacrylat-Haftklebstoffs 2A wurde beidseitig ein Film des Polyacrylat-Haftklebstoffs 2B kaschiert. Unmittelbar vor dem Zukaschieren des Films des Polyacrylat-Haftklebstoffs 2B zu dem geschäumten Film des Polyacrylat-Haftklebstoffs 2A wurde die jeweils zu kaschierende Oberfläche des Films des Polyacrylat-Haftklebstoffs 2A bei einer Corona-Dosis von 35 Wmin/m² Luftcorona-vorbehandelt. Vor der zweiten Kaschierung wurde die beidseitig silikonisierte Trennfolie des geschäumten Polyacrylat-Haftklebstoffs 2A ausgedeckt. Nach der zweiten Kaschierung wurde auch eine der beidseitig silikonisierten Trennfolien der beiden geschäumten Polyacrylat-Haftklebstoffe 2B ausgedeckt. Der dreischichtige Verbund aus Polyacrylat-Haftklebstoff 2B / Polyacrylat-Haftklebstoff 2A / Polyacrylat-Haftklebstoff 2B wurde aufgewickelt und vier Wochen bei Raumtemperatur gelagert, bevor er weiter für die Primerprüfung verwendet wurde. Der aufgewickelte Verbund ist das Testklebeband 2.

Die beispielhaft in ihrer Zusammensetzung und Herstellmethodik beschriebenen Polyacrylat-Haftklebstoffe sind in DE 10 2010 062 669 ausführlich beschrieben. Der Offenbarungsgehalt dieser Schrift sei explizit in den Offenbarungsgehalt der vorliegenden Beschreibung eingebunden.

Testklebeband 3 (Einschicht-Klebeband auf Basis einer Polyacrylat/ Synthesekautschuk-Mischung)

Ein beispielhafter Polyacrylat/ Synthesekautschuk-Haftklebstoff 3 zur Herstellung des Testklebebandes 3 wurde wie folgt hergestellt:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt.

Nach 5 h sowie nach 7 h wurde jeweils mit 150 g Bis-(4-*tert*-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde in einem Aufkonzentrationsextruder bei Unterdruck vom Lösemittel befreit (Restlösemittelgehalt $\leq$ 0,3 Masseprozent). Das resultierende Polyacrylat-Basispolymer hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

Die Mischung mit dem Synthesekautschuk wurde wie folgt hergestellt:

In einem Planetwalzenextruder wurde über einen Feststoffdosierer der Synthesekautschuk Kraton D1118 als Granulat aufgeschmolzen. Es folgte die Zugabe einer Mikroballonpaste (50 % Expancel 051DU40 in Ethomeen C25). Über einen Sidefeeder wurde das Polyacrylat-Basispolymer zugeführt, das in einem Einschneckenextruder vorgeschmolzen wurde, und ein Terpenphenolharz (Dertophen DT105) zudosiert. Der Mischung wurden Vernetzer- (Polypox R16 15 % in Rheofos RDP) und Beschleuniger- (15 % Epicure 925 in Rheofos RDP) Lösung zugegeben. Die Schmelze wurde durchmischt und über einen Zweiwalzenkalander zwischen zwei Trennfolien (silikonisierte PET-Folie) beschichtet. Es resultierte ein einschichtiges Klebeband mit einer Schichtdicke von 1200 $\mu$m und einer Dichte von 550 kg/m$^3$. Dieses Klebeband ist das Testklebeband 3. Die Zusammensetzung lag bei 48 % Polyacrylat, 25 % Kraton D1118, 18 % Dertophen DT105, 4 % Vernetzer-/Beschleuniger-Lösung (Vernetzer:Beschleuniger = 1:1), 5 % Mikroballonpaste (Angaben in Gew.-%). Die Klebkraft auf Stahl nach 3 Tagen Aufziehzeit betrug ca. 37 N/cm.

Testklebeband 4: 3M™ Acrylic Foam Tape 5314

Beschreibung: 760 $\mu$m dickes, doppelseitiges Acrylatschaum-Klebeband; Klebkraft auf Stahl nach 3 Tagen Aufziehzeit: 70,1 N/cm (bis zur Überwindung des Erstwiderstandes zu Beginn der Abschälens), 24,4 N/cm (im weiteren Verlauf des Abschälens); für die Tests wurde die abgedeckte Seite verwendet.

Testklebeband 5: tesa®4657

Beschreibung: 290 $\mu$m dickes, einseitiges Klebeband mit einem acrylatbeschichteten Gewebeträger und einer Klebmasse auf Naturkautschukbasis; Klebkraft auf Stahl: ca. 4,6 N/cm.

Zur Herstellung des erfindungsgemäß im Primer enthaltenen Copolymerisats wurden die folgenden Rohstoffe verwendet:

| Chemische Verbindung | Handelsname | Hersteller | CAS-Nr. |
|---|---|---|---|
| N-Vinylcaprolactam | | Sigma-Aldrich | 2235-00-9 |
| N-Vinyl-2-pyrrolidon | | Sigma-Aldrich | 88-12-0 |
| Acrylsäure-n-Butylester | n-Butylacrylat | Rohm & Haas | 141-32-2 |
| 2-Ethylhexylacrylat | | Brenntag | 103-11-7 |
| Bis-(4-tert-butylcyclohexyl)peroxydicarbonat | Perkadox®16 | Akzo Nobel | 15520-11-3 |

(fortgesetzt)

| Chemische Verbindung | Handelsname | Hersteller | CAS-Nr. |
|---|---|---|---|
| 2,2'-Azobis(2-methylpropionitril), AIBN | Vazo®64 | DuPont | 78-67-1 |

Weiterhin wurden die folgenden Lösemittel zur Herstellung des erfindungsgemäß im Primer enthaltenen Copolymerisats verwendet:

| Bezeichnung | CAS-Nr. | Hersteller |
|---|---|---|
| Spezialbenzin 60/95 | 64742-49-0 | Shell, Exxon |
| Aceton | 67-64-1 | Shell |

Die Polyacrylat-Haftklebstoffe zur Verwendung als Bestandteil im erfindungsgemäßen Primer wurden wie folgt hergestellt:

Primer-Haftklebstoff 1

Ein für radikalische Polymerisationen konventioneller 100 L-Glasreaktor wurde mit 12,0 kg N-Vinylcaprolactam, 28,0 kg Butylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 1.

Primer-Haftklebstoff 2

Ein für radikalische Polymerisationen konventioneller 100 L-Glasreaktor wurde mit 8,0 kg N-Vinylcaprolactam, 32,0 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 2.

Primer-Haftklebstoff 3

Ein für radikalische Polymerisationen konventioneller 100 L-Glasreaktor wurde mit 8,0 kg N-Vinyl-2-pyrrolidon, 32 kg Butylacrylat, und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 3.

Primer-Haftklebstoff 4 für ein Vergleichsbeispiel

Ein für radikalische Polymerisationen konventioneller 100 L-Glasreaktor wurde mit 15,4 kg Butylacrylat, 24,4 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 4.

Die Primer-Haftklebstoffe 1 bis 4 wurden kurz per DMA-Messungen charakterisiert. Die G'- und G"-Kurven der Primer-Haftklebstoffe 1 bis 4 lagen im Deformationsfrequenzbereich von $10^0$ bis $10^1$ rad/sec bei 23 °C stets zumindest zum Teil im Bereich von $10^3$ bis $10^7$ Pa.

Zur Herstellung der erfindungsgemäßen Primer wurden die hinsichtlich ihrer Herstellung und Zusammensetzung oben beschriebenen Primer-Haftklebstoffe sowie die folgenden Rohstoffe verwendet:

| Chemische Verbindung/ Beschreibung (Herstellerangaben) | Handelsname | Hersteller oder Lieferant | CAS-Nr. |
|---|---|---|---|
| N-Dimethoxy(methyl)silyl-methyl-O-methylcarbamat | Geniosil®XL 65 | Wacker-Chemie | 23432-65-7 |
| N-Trimethoxysilylmethyl-O-methylcarbamat | Geniosil®XL 63 | Wacker-Chemie | 23432-64-6 |
| Methacryloxymethyltrimethoxysilan | Geniosil®XL 33 | Wacker-Chemie | 54586-78-6 |
| N-Cyclohexylamino-methyltriethoxysilan | Geniosil®XL 926 | Wacker-Chemie | 26495-91-0 |
| Titantetraisopropanolat | Tyzor® TPT | Lehmann & Voß | 546-68-9 |
| Tetra-n-butyl-Titanat | Tyzor® TnBT | Lehmann & Voß | 5593-70-4 |
| Bis(acetylacetonato)-isobutyl-isopropyl-Titanat | Tyzor® AA-95 | Lehmann & Voß | 97281-09-9 |
| Tetra-n-Butyl-Zirkonat | Tyzor® NBZ | Lehmann & Voß | 1071-76-7 |
| Ethylendiamin | | Sigma-Aldrich | 107-15-3 |
| Isophorondiamin | | Sigma-Aldrich | 2855-13-2 |
| Tosylisocyanat | Additiv TI® | OMG Borchers | 4083-64-1 |

Zur Herstellung der Vergleichsbeispiele und der weniger vorteilhaften Beispiele wurden die erfindungsgemäßen Primer mit folgenden Rohstoffen modifiziert:

| Chemische Verbindung/Beschreibung (Herstellerangaben) | Handelsname | Hersteller oder Lieferant |
|---|---|---|
| SBS-Blockcopolymer | Kraton® D 1102 E | Kraton Polymers |
| Hydriertes SEBS-Blockcopolymer | Kraton® G 1652 E | Kraton Polymers |
| Vinyltrimethoxysilan (CAS-Nr.: 2768-02-7) | Geniosil® XL 10 | Wacker Chemie |

Weiterhin wurden zusätzlich zu den in den Primer-Haftklebstoffen enthaltenen Lösemitteln die folgenden Lösemittel zur Herstellung der erfindungsgemäßen Primer verwendet:

| Bezeichnung | CAS-Nr. | Hersteller oder Lieferant |
|---|---|---|
| Ethylacetat | 141-78-6 | Brenntag |
| Aceton | 67-64-1 | Shell |
| Isopropanol | 67-63-0 | Sigma-Aldrich |

Zusätzlich zu den in den Primer-Haftklebstoffen enthaltenen Lösemitteln wurde das folgende Lösemittel zur Herstellung der unvorteilhaften Beispiele verwendet:

| Bezeichnung | CAS-Nr. | Hersteller oder Lieferant |
|---|---|---|
| Toluol | 108-88-3 | Sigma-Aldrich |

Die folgenden Pigmente und funktionalen Füllstoffe wurden beispielhaft in die Primer eingearbeitet:

| Chemische Verbindung/Beschreibung (Herstellerangaben) | Handelsname | Hersteller oder Lieferant | CAS-Nr. |
|---|---|---|---|
| Furnace-Ruß, Ölzahl OAN: 118, BET-Oberfläche: 115 | Printex® 60 | Orion | 1333-86-4 |
| Furnace-Ruß, Ölzahl OAN: 128, BET-Oberfläche: 80 | Printex® 3 | Orion | 1333-86-4 |
| Kupferchromitschwarzspinell C.I. Pigment Black 28 | Black 30C965® | Shepherd | 68186-91-4 |

Weiterhin wurde noch der folgende fluoreszierende optische Aufheller verwendet:

| Chemische Verbindung/Beschreibung (Herstellerangaben) | Handelsname | Hersteller oder Lieferant | CAS-Nr. |
|---|---|---|---|
| 2,5-Thiophendiylbis(5-tert-butyl-1,3-benzoxazol) | Tinopal OB ® | BASF | 7128-64-5 |

**Beispiele**

Die in den Beispielen angegebenen Rohstoffe/ Komponenten wurden mit einem Laborrührwerk der Firma IKA® unter Verwendung eines Propellerrührers bei mittlerer Drehzahl gemischt. Die Rohstoffe wurden dabei in der Reihenfolge zugegeben, wie sie in den folgenden Tabellen aufgeführt sind. Nachdem das letzte Lösemittel zugegeben war, wurde 20 Minuten gerührt. Anschließend wurde nach jeder Zugabe des jeweils nächsten Rohstoffs 10 Minuten gerührt. Nachdem der letzte Rohstoff zugegeben war, wurde 30 Minuten gerührt.

Die Einarbeitung der Pigmente und rheologischen Additive zur Erzielung einer feinkörnigen, blickdichten Primerschicht erfolgte in allen Beispielen mit dem nach dem Rotor-Stator-Prinzip arbeitenden Labor-Dissolver Ultra-Turrax® T50 der Firma IKA® in der Weise, dass das Pigment und gegebenenfalls die weiteren rheologischen Additive in die zunächst hergestellte Mischung aus Primer-Haftklebstoff und Lösemitteln eindispergiert wurden. Der Ultra-Turrax® T50 wurde dabei mit einer Drehgeschwindigkeit von 7000 Umdrehungen pro Minute betrieben. Es wurde 30 Minuten lang dispergiert.

Anschließend wurden die restlichen Rohstoffe/ Komponenten - in der Reihenfolge wie in den folgenden Tabellen aufgeführt - zugemischt. Das Zumischen dieser restlichen Rohstoffe/ Komponenten erfolgte mit dem Laborrührwerk der Firma IKA® unter Verwendung eines Propellerrührers.

Die Zusammensetzungen der Pigmente und gegebenenfalls rheologische Additive enthaltenden Primer wurden gegenüber der diese Stoffe nicht enthaltenden Zusammensetzungen dahingehend geändert, dass die Gewichtsanteile des Silans, der Metallverbindung und des Amins unter Beibehaltung der Gewichtsverhältnisse dieser Stoffe zueinander erhöht wurden. Die Gewichtsverhältnisse der übrigen Stoffe blieben untereinander ebenfalls unverändert.

Beispiel 1

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,55 |
| 2 | Aceton | 25,25 |
| 3 | Isopropanol | 14,52 |
| 4 | Ethylacetat | 33,51 |
| 5 | Tyzor® TPT | 4,90 |
| 6 | Geniosil® XL 65 | 2,01 |

(fortgesetzt)

| Nr. | Rohstoff / Komponente | Gewichtsprozent |
|-----|----------------------|-----------------|
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 15 min | 1 h | 15 min | 1 h | 1 h | 1 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 15 sec (A) |
| Zeit bis zum Erreichen von Repositionierbarkeit | 30 sec | 60 sec | 15 sec | 30 sec | 15 sec | 15 sec | 15 sec | 30 sec | |

K = Kohäsiv = Schaumspalten im Klebeband
A = Adhäsiv
h = Stunden
min = Minuten
sec = Sekunden

Beispiel 1a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 60 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 1 geprüft, wobei die gleichen Ergebnisse erhalten wurden.

Beispiel 1b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 3 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 1 geprüft, wobei die gleichen Ergebnisse erhalten wurden.

Beispiel 1c

Zusammensetzung des Primers mit dem Farbpigment Black 30C965®:

| Nr. | Rohstoff / Komponente | Gewichtsprozent |
|---|---|---|
| 1 | Primer-Haftklebstoff 1 (40,0 Masseprozent Feststoffanteil) | 16,45 |

(fortgesetzt)

| Nr. | Rohstoff / Komponente | Gewichtsprozent |
|---|---|---|
| 2 | Aceton | 21,24 |
| 3 | Isopropanol | 12,22 |
| 4 | Ethylacetat | 28,19 |
| 5 | Black 30C965® | 8,00 |
| 6 | Tyzor® TPT | 9,50 |
| 7 | Geniosil® XL 65 | 3,90 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 1 geprüft, wobei die gleichen Ergebnisse erhalten wurden.

Beispiel 2

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,85 |
| 2 | Aceton | 24,14 |
| 3 | Isopropanol | 14,75 |
| 4 | Ethylacetat | 32,90 |
| 5 | Tyzor® TPT | 6,09 |
| 6 | Geniosil® XL 65 | 2,01 |
| 7 | Ethylendiamin | 0,26 |

Die Flash-Off Zeit betrug 30 sec.

Der Primer wurde mit den Testklebebändern geprüft, wobei die folgenden Ergebnisse erhalten wurden:

|  | Testklebeband 1 | | Testklebeband 2 | | Testklebeband 3 | | Testklebeband 4 | | Testklebeband 5 |
|---|---|---|---|---|---|---|---|---|---|
|  | Glas | Keramik | Glas | Keramik | Glas | Keramik | Glas | Keramik | Glas |
| Verklebungszeit bis zum Schaumspalten | 12 h | 12 h | 12 h | 12 h | 24 h | 24 h | 12 h | 12 h |  |
| Bruchbild nach Klimalagerung a) | K | K | K | K | K | K | K | K |  |
| Bruchbild nach Klimalagerung b) | K | K | K | K | K | K | K | K |  |
| Zeit bis zum Erreichen einer ausreichenden Anfangsfestigkeit |  |  |  |  |  |  |  |  | 30 sec (A) |
| Zeit bis zum Erreichen von Repositionierbarkeit | 60 sec | 60 sec | 30 sec | 30 sec | 15 sec | 15 sec | 30 sec | 30 sec |  |

K = Kohäsiv = Schaumspalten im Klebeband
A = Adhäsiv
h = Stunden
min = Minuten
sec = Sekunden

EP 3 231 823 B1

Beispiel 2a

Zusammensetzung des Primers mit dem Farbpigment Printex® 60:

| Nr. | Rohstoff / Komponente | Gewichtsprozent |
|-----|----------------------|-----------------|
| 1 | Primer-Haftklebstoff 1 (40,0 Masseprozent Feststoffanteil) | 17,50 |
| 2 | Aceton | 21,28 |
| 3 | Isopropanol | 13,00 |
| 4 | Ethylacetat | 29,00 |
| 5 | Printex® 60 | 3,00 |
| 6 | Tyzor® TPT | 11,82 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 2 geprüft, wobei die gleichen Ergebnisse erhalten wurden.

Beispiel 2b

Zusammensetzung des Primers mit dem Farbpigment Printex® 3:

| Nr. | Rohstoff / Komponente | Gewichtsprozent |
|-----|----------------------|-----------------|
| 1 | Primer-Haftklebstoff 1 (40,0 Masseprozent Feststoffanteil) | 17,50 |
| 2 | Aceton | 21,28 |
| 3 | Isopropanol | 13,00 |
| 4 | Ethylacetat | 29,00 |
| 5 | Printex® 3 | 3,00 |
| 6 | Tyzor® TPT | 11,82 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 2 geprüft, wobei die gleichen Ergebnisse erhalten wurden.

Beispiel 2c

Zusammensetzung des Primers mit dem Farbpigment Black 30C965®:

| Nr. | Rohstoff / Komponente | Gewichtsprozent |
|-----|----------------------|-----------------|
| 1 | Primer-Haftklebstoff 1 (40,0 Masseprozent Feststoffanteil) | 16,42 |

(fortgesetzt)

| Nr. | Rohstoff / Komponente | Gewichtsprozent |
|---|---|---|
| 2 | Aceton | 19,96 |
| 3 | Isopropanol | 12,20 |
| 4 | Ethylacetat | 27,21 |
| 5 | Black 30C965® | 8,00 |
| 6 | Tyzor® TPT | 11,82 |
| 7 | Geniosil® XL 65 | 3,90 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 2 geprüft, wobei die gleichen Ergebnisse erhalten wurden.

Beispiel 3

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,63 |
| 2 | Aceton | 25,35 |
| 3 | Isopropanol | 14,58 |
| 4 | Ethylacetat | 32,96 |
| 5 | Tyzor® TPT | 4,90 |
| 6 | Geniosil® XL 63 | 2,32 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | | Testklebeband 1 | | Testklebeband 2 | | Testklebeband 3 | | Testklebeband 4 | | Testklebeband 5 |
|---|---|---|---|---|---|---|---|---|---|---|
| | | Glas | Keramik | Glas | Keramik | Glas | Keramik | Glas | Keramik | Glas |
| Verklebungszeit bis zum Schaumspalten | | 1 h | 1 h | 30 min | 1 h | 1 h | 1 h | 1 h | 1h | |
| Bruchbild nach Klimalagerung a) | | K | K | K | K | K | K | K | K | |
| Bruchbild nach Klimalagerung b) | | K | K | K | K | K | K | K | K | |
| Zeit bis zum Erreichen einer ausreichenden Anfangsfestigkeit | | | | | | | | | | 60 sec (A) |
| Zeit bis zum Erreichen von Repositionierbarkeit | | 30 sec | 60 sec | 15 sec | 60 sec | 15 sec | 15 sec | 30 sec | 30 sec | |

K = Kohäsiv = Schaumspalten im Klebeband
A = Adhäsiv
h = Stunden
min = Minuten
sec = Sekunden

Beispiel 3a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,40 |
| 5 | Printex® 60 | 3,00 |
| 6 | Tyzor® TPT | 9,50 |
| 7 | Geniosil® XL 63 | 4,50 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 3 geprüft, wobei die gleichen Ergebnisse erhalten wurden.

Beispiel 3b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,40 |
| 5 | Printex® 3 | 3,00 |
| 6 | Tyzor® TPT | 9,50 |
| 7 | Geniosil® XL 63 | 4,50 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 3 geprüft, wobei die gleichen Ergebnisse erhalten wurden.

Beispiel 3c

Zusammensetzung des Primers mit dem Farbpigment Black 30C965®:

| Nr. | Rohstoff / Komponente | Gewichtsprozent |
|---|---|---|
| 1 | Primer-Haftklebstoff 1 (40,0 Masseprozent Feststoffanteil) | 16,44 |

(fortgesetzt)

| Nr. | Rohstoff / Komponente | Gewichtsprozent |
|---|---|---|
| 2 | Aceton | 21,23 |
| 3 | Isopropanol | 12,21 |
| 4 | Ethylacetat | 27,62 |
| 5 | Black 30C965® | 8,00 |
| 6 | Tyzor® TPT | 9,50 |
| 7 | Geniosil® XL 63 | 4,50 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 3 geprüft, wobei die gleichen Ergebnisse erhalten wurden.

Beispiel 4

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,63 |
| 2 | Aceton | 25,35 |
| 3 | Isopropanol | 14,58 |
| 4 | Ethylacetat | 32,96 |
| 5 | Tyzor® TPT | 4,90 |
| 6 | Geniosil® XL 33 | 2,32 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 12 h | 12 h | 1 h | 12 h | 12 h | 12 h | 12 h | 12 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 240 sec (A) |
| Zeit bis zum Erreichen von Repositionierbarkeit | 240 sec | 180 sec | 180 sec | 120 sec | 120 sec | 90 sec | 180 sec | 120 sec | |

K = Kohäsiv = Schaumspalten im Klebeband
A = Adhäsiv
h = Stunden
min = Minuten
sec = Sekunden

Beispiel 4a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,40 |
| 5 | Printex® 60 | 3,00 |
| 6 | Tyzor® TPT | 9,50 |
| 7 | Geniosil® XL 33 | 4,50 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 4 geprüft, wobei die gleichen Ergebnisse erhalten wurden.

Beispiel 4b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,40 |
| 5 | Printex® 3 | 3,00 |
| 6 | Tyzor® TPT | 9,50 |
| 7 | Geniosil® XL 33 | 4,50 |
| 8 | Ethylendiamin | 0,50 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 4 geprüft, wobei die gleichen Ergebnisse erhalten wurden.

Beispiel 5

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,52 |

(fortgesetzt)

| Nr. | Rohstoff / Komponente | Gewichtsprozent |
|---|---|---|
| 2 | Aceton | 25,21 |
| 3 | Isopropanol | 14,50 |
| 4 | Ethylacetat | 33,70 |
| 5 | Tyzor® TPT | 3,97 |
| 6 | Geniosil® XL 926 | 2,89 |
| 7 | Ethylendiamin | 0,21 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 12 h | 12 h | 1 h | 12 h | 12 h | 12 h | 12 h | 12 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 120 sec (A) |
| Zeit bis zum Erreichen von Repositionierbarkeit | 240 sec | 180 sec | 180 sec | 120 sec | 120 sec | 90 sec | 180 sec | 120 sec | |

K = Kohäsiv = Schaumspalten im Klebeband
A = Adhäsiv
h = Stunden
min = Minuten
sec = Sekunden

Beispiel 5a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 30,20 |
| 5 | Printex® 60 | 3,00 |
| 6 | Tyzor® TPT | 7,70 |
| 7 | Geniosil® XL 926 | 5,60 |
| 8 | Ethylendiamin | 0,40 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 5 geprüft, wobei die gleichen Ergebnisse erhalten wurden.

Beispiel 5b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 30,20 |
| 5 | Printex® 3 | 3,00 |
| 6 | Tyzor® TPT | 7,70 |
| 7 | Geniosil® XL 926 | 5,60 |
| 8 | Ethylendiamin | 0,40 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 5 geprüft, wobei die gleichen Ergebnisse erhalten wurden.

Beispiel 6

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,61 |

(fortgesetzt)

| Nr. | Rohstoff / Komponente | Gewichtsprozent |
|---|---|---|
| 2 | Aceton | 25,32 |
| 3 | Isopropanol | 14,56 |
| 4 | Ethylacetat | 33,12 |
| 5 | Tyzor® TnBT | 5,15 |
| 6 | Geniosil® XL 65 | 2,01 |
| 7 | Ethylendiamin | 0,23 |

Die Flash-Off Zeit betrug 35 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 30 min | 1 h | 30 min | 30 min | 1 h | 1 h | 30 min | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 30 sec (A) |
| Zeit bis zum Erreichen von Repositionierbarkeit | 60 sec | 60 sec | 30 sec | 30 sec | 15 sec | 15 sec | 30 sec | 30 sec | |

K = Kohäsiv = Schaumspalten im Klebeband
A = Adhäsiv
h = Stunden
min = Minuten
sec = Sekunden

Beispiel 6a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,56 |
| 5 | Printex® 60 | 3,00 |
| 6 | Tyzor® TnBT | 10,00 |
| 7 | Geniosil® XL 65 | 3,90 |
| 8 | Ethylendiamin | 0,44 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 6 geprüft, wobei die gleichen Ergebnisse erhalten wurden.

Beispiel 6b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 29,56 |
| 5 | Printex® 3 | 3,00 |
| 6 | Tyzor® TnBT | 10,00 |
| 7 | Geniosil® XL 65 | 3,90 |
| 8 | Ethylendiamin | 0,44 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 6 geprüft, wobei die gleichen Ergebnisse erhalten wurden.

Beispiel 7

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,73 |

(fortgesetzt)

| Nr. | Rohstoff / Komponente | Gewichtsprozent |
|---|---|---|
| 2 | Aceton | 25,48 |
| 3 | Isopropanol | 14,66 |
| 4 | Ethylacetat | 32,24 |
| 5 | Tyzor® AA-95 | 5,67 |
| 6 | Geniosil® XL 65 | 2,01 |
| 7 | Ethylendiamin | 0,21 |

Die Flash-Off Zeit betrug 35 sec.

Der Primer wurde mit den Testklebebändern geprüft, wobei die folgenden Ergebnisse erhalten wurden:

|  | Testklebeband 1 | | Testklebeband 2 | | Testklebeband 3 | | Testklebeband 4 | | Testklebeband 5 |
|---|---|---|---|---|---|---|---|---|---|
|  | Glas | Keramik | Glas | Keramik | Glas | Keramik | Glas | Keramik | Glas |
| Verklebungszeit bis zum Schaumspalten | 12 h | 1 h | 1 h | 12 h | 12 h | 12 h | 12 h | 1 h |  |
| Bruchbild nach Klimalagerung a) | K | K | K | K | K | K | K | K |  |
| Bruchbild nach Klimalagerung b) | K | K | K | K | K | K | K | K |  |
| Zeit bis zum Erreichen einer ausreichenden Anfangsfestigkeit |  |  |  |  |  |  |  |  | 120 sec (A) |
| Zeit bis zum Erreichen von Repositionierbarkeit | 120 sec | 60 sec | 120 sec | 120 sec | 30 sec | 60 sec | 120 sec | 60 sec |  |

K = Kohäsiv = Schaumspalten im Klebeband
A = Adhäsiv
h = Stunden
min = Minuten
sec = Sekunden

EP 3 231 823 B1

Beispiel 7a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 28,60 |
| 5 | Printex® 60 | 3,00 |
| 6 | Tyzor® AA-95 | 11,00 |
| 7 | Geniosil® XL 65 | 3,90 |
| 8 | Ethylendiamin | 0,40 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 7 geprüft, wobei die gleichen Ergebnisse erhalten wurden.

Beispiel 7b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 28,60 |
| 5 | Printex® 3 | 3,00 |
| 6 | Tyzor® AA-95 | 11,00 |
| 7 | Geniosil® XL 65 | 3,90 |
| 8 | Ethylendiamin | 0,40 |

Eine 10 $\mu$m dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 7 geprüft, wobei die gleichen Ergebnisse erhalten wurden.

Beispiel 8

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,73 |

(fortgesetzt)

| Nr. | Rohstoff / Komponente | Gewichtsprozent |
|---|---|---|
| 2 | Aceton | 25,49 |
| 3 | Isopropanol | 14,66 |
| 4 | Ethylacetat | 32,22 |
| 5 | Tyzor® NBZ | 5,67 |
| 6 | Geniosil® XL 65 | 2,01 |
| 7 | Ethylendiamin | 0,22 |

Die Flash-Off Zeit betrug 35 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 1 h | 1 h | 15 min | 1 h | 1 h | 1 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 30 sec (A) |
| Zeit bis zum Erreichen von Repositionierbarkeit | 60 sec | 60 sec | 15 sec | 30 sec | 30 sec | 15 sec | 30 sec | 30 sec | |

K = Kohäsiv = Schaumspalten im Klebeband
A = Adhäsiv
h = Stunden
min = Minuten
sec = Sekunden

Beispiel 8a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 28,57 |
| 5 | Printex® 60 | 3,00 |
| 6 | Tyzor® NBZ | 11,00 |
| 7 | Geniosil® XL 65 | 3,90 |
| 8 | Ethylendiamin | 0,43 |

Eine 10 μm dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 8 geprüft, wobei die gleichen Ergebnisse erhalten wurden.

Beispiel 8b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 28,57 |
| 5 | Printex® 3 | 3,00 |
| 6 | Tyzor® NBZ | 11,00 |
| 7 | Geniosil® XL 65 | 3,90 |
| 8 | Ethylendiamin | 0,43 |

Eine 10 μm dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 8 geprüft, wobei die gleichen Ergebnisse erhalten wurden.

Beispiel 9

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,35 |

(fortgesetzt)

| Nr. | Rohstoff / Komponente | Gewichtsprozent |
|---|---|---|
| 2 | Aceton | 24,98 |
| 3 | Isopropanol | 14,38 |
| 4 | Ethylacetat | 34,94 |
| 5 | Tyzor® TPT | 3,87 |
| 6 | Geniosil® XL 65 | 1,91 |
| 7 | Isophorondiamin | 0,57 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 12 h | 24 h | 12 h | 12 h | 24 h | 12 h | 12 h | 12 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 120 sec (A) |
| Zeit bis zum Erreichen von Repositionierbarkeit | 120 sec | 180 sec | 120 sec | 120 sec | 60 sec | 60 sec | 120 sec | 120 sec | |

K = Kohäsiv = Schaumspalten im Klebeband
A = Adhäsiv
h = Stunden
min = Minuten
sec = Sekunden

Beispiel 9a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 31,60 |
| 5 | Printex® 60 | 3,00 |
| 6 | Tyzor® TPT | 7,50 |
| 7 | Geniosil® XL 65 | 3,70 |
| 8 | Isophorondiamin | 1,10 |

Eine 10 µm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 9 geprüft, wobei die gleichen Ergebnisse erhalten wurden.

Beispiel 9b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 22,60 |
| 3 | Isopropanol | 13,00 |
| 4 | Ethylacetat | 31,60 |
| 5 | Printex® 3 | 3,00 |
| 6 | Tyzor® TPT | 7,50 |
| 7 | Geniosil® XL 65 | 3,70 |
| 8 | Isophorondiamin | 1,10 |

Eine 10 µm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 9 geprüft, wobei die gleichen Ergebnisse erhalten wurden.

Beispiel 10

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 20,09 |

(fortgesetzt)

| Nr. | Rohstoff / Komponente | Gewichtsprozent |
|-----|----------------------|-----------------|
| 2 | Aceton | 23,07 |
| 3 | Isopropanol | 14,92 |
| 4 | Ethylacetat | 32,67 |
| 5 | Tyzor® TPT | 4,38 |
| 6 | Geniosil® XL 65 | 2,06 |
| 7 | Ethylendiamin | 0,23 |
| 8 | Additiv TI® | 2,58 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 1 h | 1 h | 15 min | 1 h | 1 h | 1 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 60 sec (A+K) |
| Zeit bis zum Erreichen von Repositionierbarkeit | 90 sec | 90 sec | 60 sec | 60 sec | 30 sec | 30 sec | 60 sec | 60 sec | |

K = Kohäsiv = Schaumspalten im Klebeband
A = Adhäsiv
h = Stunden
min = Minuten
sec = Sekunden

Beispiel 10a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 20,10 |
| 3 | Isopropanol | 13,00 |
| 4 | Ethylacetat | 28,46 |
| 5 | Printex® 60 | 3,00 |
| 6 | Tyzor® TPT | 8,50 |
| 7 | Geniosil® XL 65 | 4,00 |
| 8 | Ethylendiamin | 0,44 |
| 9 | Additiv TI® | 5,00 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 10 geprüft, wobei die gleichen Ergebnisse erhalten wurden.

Beispiel 10b

Zusammensetzung des Primers mit dem Farbpigment Printex® 3:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Aceton | 20,10 |
| 3 | Isopropanol | 13,00 |
| 4 | Ethylacetat | 28,46 |
| 5 | Printex® 3 | 3,00 |
| 6 | Tyzor® TPT | 8,50 |
| 7 | Geniosil® XL 65 | 4,00 |
| 8 | Ethylendiamin | 0,44 |
| 9 | Additiv TI® | 5,00 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 10 geprüft, wobei die gleichen Ergebnisse erhalten wurden.

Beispiel 11

Zusammensetzung des Primers:

| Nr. | Rohstoff / Komponente | Gewichtsprozent |
|-----|-----------------------|-----------------|
| 1 | Primer-Haftklebstoff 2 (40,0 Masseprozent Feststoffanteil) | 19,55 |
| 2 | Aceton | 25,25 |
| 3 | Isopropanol | 14,52 |
| 4 | Ethylacetat | 33,51 |
| 5 | Tyzor® TPT | 4,90 |
| 6 | Geniosil® XL 65 | 2,01 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 1 h | 1 h | 1 h | 1 h | 1 h | 1 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 60 sec (A) |
| Zeit bis zum Erreichen von Repositionierbarkeit | 120 sec | 180 sec | 120 sec | 120 sec | 60 sec | 60 sec | 120 sec | 120 sec | |

K = Kohäsiv = Schaumspalten im Klebeband
A = Adhäsiv
h = Stunden
min = Minuten
sec = Sekunden

Beispiel 11a

Zusammensetzung des Primers mit dem Farbpigment Printex® 60:

| Nr. | Rohstoff / Komponente | Gewichtsprozent |
|---|---|---|
| 1 | Primer-Haftklebstoff 2 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 60 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 11 geprüft, wobei die gleichen Ergebnisse erhalten wurden.

Beispiel 11b

Zusammensetzung des Primers mit dem Farbpigment Printex® 3:

| Nr. | Rohstoff / Komponente | Gewichtsprozent |
|---|---|---|
| 1 | Primer-Haftklebstoff 2 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 3 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 11 geprüft, wobei die gleichen Ergebnisse erhalten wurden.

Beispiel 12

Zusammensetzung des Primers:

| Nr. | Rohstoff / Komponente | Gewichtsprozent |
|---|---|---|
| 1 | Primer-Haftklebstoff 3 (40,0 Masseprozent Feststoffanteil) | 19,55 |

(fortgesetzt)

| Nr. | Rohstoff / Komponente | Gewichtsprozent |
|-----|----------------------|-----------------|
| 2 | Aceton | 25,25 |
| 3 | Isopropanol | 14,52 |
| 4 | Ethylacetat | 33,51 |
| 5 | Tyzor® TPT | 4,90 |
| 6 | Geniosil® XL 65 | 2,01 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 1 h | 12 h | 1 h | 12 h | 12 h | 12 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 120 sec (A) |
| Zeit bis zum Erreichen von Repositionierbarkeit | 180 sec | 180 sec | 180 sec | 180 sec | 60 sec | 60 sec | 180 sec | 180 sec | |

K = Kohäsiv = Schaumspalten im Klebeband
A = Adhäsiv
h = Stunden
min = Minuten
sec = Sekunden

Beispiel 12a

Zusammensetzung des Primers mit dem Farbpigment Printex® 60:

| Nr. | Rohstoff / Komponente | Gewichtsprozent |
|---|---|---|
| 1 | Primer-Haftklebstoff 3 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 60 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 12 geprüft, wobei die gleichen Ergebnisse erhalten wurden.

Beispiel 12b

Zusammensetzung des Primers mit dem Farbpigment Printex® 3:

| Nr. | Rohstoff / Komponente | Gewichtsprozent |
|---|---|---|
| 1 | Primer-Haftklebstoff 3 (40,0 Masseprozent Feststoffanteil) | 17,50 |
| 2 | Aceton | 22,60 |
| 3 | Isopropanol | 13,00 |
| 4 | Ethylacetat | 30,00 |
| 5 | Printex® 3 | 3,00 |
| 6 | Tyzor® TPT | 9,50 |
| 7 | Geniosil® XL 65 | 3,90 |
| 8 | Ethylendiamin | 0,50 |

Eine 10 μm dicke Schicht dieses Primers auf Glas war blickdicht. Die Transmission im Wellenlängenbereich von 300 nm bis 850 nm betrug 0%.
Der Primer wurde in gleicher Weise wie der pigmentfreie Primer aus Beispiel 12 geprüft, wobei die gleichen Ergebnisse erhalten wurden.

Beispiel 13

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,55 |

(fortgesetzt)

| Nr. | Rohstoff / Komponente | Gewichtsprozent |
|-----|-----------------------|-----------------|
| 2 | Aceton | 25,25 |
| 3 | Isopropanol | 14,52 |
| 4 | Ethylacetat | 33,36 |
| 5 | Tyzor® TPT | 4,90 |
| 6 | Geniosil® XL 65 | 2,01 |
| 7 | Ethylendiamin | 0,26 |
| 8 | Tinopal OB ® | 0,15 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 15 min | 1 h | 15 min | 1 h | 1 h | 1 h | 1 h | 1 h | |
| Bruchbild nach Klimalagerung a) | K | K | K | K | K | K | K | K | |
| Bruchbild nach Klimalagerung b) | K | K | K | K | K | K | K | K | |
| Zeit bis zum Erreichen einer ausreichenden Anfangsfestigkeit | | | | | | | | | 15 sec (A) |
| Zeit bis zum Erreichen von Repositionierbarkeit | 30 sec | 60 sec | 15 sec | 30 sec | 15 sec | 15 sec | 15 sec | 30 sec | |

K = Kohäsiv = Schaumspalten im Klebeband
A = Adhäsiv
h = Stunden
min = Minuten
sec = Sekunden

Beispiel 14

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,74 |
| 2 | Toluol | 55,40 |
| 3 | Ethylacetat | 16,92 |
| 4 | Tyzor® TPT | 4,90 |
| 5 | Geniosil® XL 65 | 2,01 |
| 6 | Ethylendiamin | 0,26 |
| 7 | Kraton® D 1102 E | 0,77 |

Die Flash-Off Zeit betrug 150 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 48 h (A und K) | 48 h (A und K) | 48 h (A und K) | 48 h (A und K) | 48 h (A und K) | 48 h (A und K) | 48 h (A und K) | 48 h (A und K) | |
| Bruchbild nach Klimalagerung a) | A und K | A und K | A und K | A und K | A und K | A und K | A und K | A und K | |
| Bruchbild nach Klimalagerung b) | A und K | A und K | A und K | A und K | A und K | A und K | A und K | A und K | |
| Zeit bis zum Erreichen einer ausreichenden Anfangsfestigkeit | | | | | | | | | 120 sec (A) |
| Zeit bis zum Erreichen von Repositionierbarkeit | 90 sec | 120 sec | 90 sec | 120 sec | 60 sec | 60 sec | 90 sec | 90 sec | |
| K = Kohäsiv = Schaumspalten im Klebeband<br>A = Adhäsiv<br>h = Stunden<br>min = Minuten<br>sec = Sekunden | | | | | | | | | |

Beispiel 14a

Zusammensetzung des Primers mit dem Farbpigment Printex® 60:

| Nr. | Rohstoff / Komponente | Gewichtsprozent |
|---|---|---|
| 1 | Primer-Haftklebstoff 1 (40,0 Masseprozent Feststoffanteil) | 17,50 |
| 2 | Toluol | 49,10 |
| 3 | Ethylacetat | 15,00 |
| 4 | Printex® 60 | 3,00 |
| 5 | Tyzor® TPT | 9,50 |
| 6 | Geniosil® XL 65 | 3,90 |
| 7 | Ethylendiamin | 0,50 |
| 8 | Kraton® D 1102 E | 1,5 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 14 geprüft, wobei die gleichen Ergebnisse erhalten wurden.

Beispiel 15

Zusammensetzung des Primers:

| Nr. | Rohstoff / Komponente | Gewichtsprozent |
|---|---|---|
| 1 | Primer-Haftklebstoff 1 (40,0 Masseprozent Feststoffanteil) | 19,74 |
| 2 | Toluol | 55,40 |
| 3 | Ethylacetat | 16,92 |
| 4 | Tyzor® TPT | 4,90 |
| 5 | Geniosil® XL 65 | 2,01 |
| 6 | Ethylendiamin | 0,26 |
| 7 | Kraton® G 1652 E | 0,77 |

Die Flash-Off Zeit betrug 160 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | 48 h (A und K) | 48 h (A und K) | 48 h (A und K) | 48 h (A und K) | 48 h (A und K) | 48 h (A und K) | 48 h (A und K) | 48 h (A und K) | |
| Bruchbild nach Klimalagerung a) | A und K | A und K | A und K | A und K | A und K | A und K | A und K | A und K | |
| Bruchbild nach Klimalagerung b) | A und K | A und K | A und K | A und K | A und K | A und K | A und K | A und K | |
| Zeit bis zum Erreichen einer ausreichenden Anfangsfestigkeit | | | | | | | | | 180 sec (A) |
| Zeit bis zum Erreichen von Repositionierbarkeit | 120 sec | 120 sec | 120 sec | 120 sec | 60 sec | 60 sec | 90 sec | 90 sec | |

K = Kohäsiv = Schaumspalten im Klebeband
A = Adhäsiv
h = Stunden
min = Minuten
sec = Sekunden

Beispiel 15a

Zusammensetzung des Primers mit dem Farbpigment Printex® 60:

| Nr. | Rohstoff / Komponente | Gewichtsprozent |
| --- | --- | --- |
| 1 | Primer-Haftklebstoff 1 (40,0 Masseprozent Feststoffanteil) | 17,50 |
| 2 | Toluol | 49,10 |
| 3 | Ethylacetat | 15,00 |
| 4 | Printex® 60 | 3,00 |
| 5 | Tyzor® TPT | 9,50 |
| 6 | Geniosil® XL 65 | 3,90 |
| 7 | Ethylendiamin | 0,50 |
| 8 | Kraton® G 1652 E | 1,5 |

Eine 10 $\mu$m dicke Schicht dieses Primers auf Glas war blickdicht. Die Transmission im Wellenlängenbereich von 300 nm bis 850 nm betrug 0%.

Der Primer wurde in gleicher Weise wie der pigmentfreie Primer aus Beispiel 15 geprüft, wobei die gleichen Ergebnisse erhalten wurden.

Vergleichsbeispiel 1

Zusammensetzung des Vergleichsprimers:

| Nr. | Rohstoff / Komponente | Gewichtsprozent |
| --- | --- | --- |
| 1 | Primer-Haftklebstoff 4 (40,0 Masseprozent Feststoffanteil) | 19,55 |
| 2 | Aceton | 25,25 |
| 3 | Isopropanol | 14,52 |
| 4 | Ethylacetat | 33,51 |
| 5 | Tyzor® TPT | 4,90 |
| 6 | Geniosil® XL 65 | 2,01 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | > 48 h | > 48 h | > 48 h | > 48 h | > 48 h | > 48 h | > 48 h | > 48 h | |
| Zeit bis zum Erreichen einer ausreichenden Anfangsfestigkeit | | | | | | | | | > 240 min |
| Zeit bis zum Erreichen von Repositionierbarkeit | >240 min | > 240 min | >240 min | > 240 min | >240 min | > 240 min | >240 min | > 240 min | |

K = Kohäsiv = Schaumspalten im Klebeband
A = Adhäsiv
h = Stunden
min = Minuten
sec = Sekunden

Vergleichsbeispiel 2

Zusammensetzung des Vergleichsprimers:

| Nr. | Rohstoff / Komponente | Gewichtsprozent |
|---|---|---|
| 1 | Primer-Haftklebstoff 1 (40,0 Masseprozent Feststoffanteil) | 19,55 |
| 2 | Aceton | 25,25 |
| 3 | Isopropanol | 14,52 |
| 4 | Ethylacetat | 33,77 |
| 5 | Tyzor® TPT | 4,90 |
| 6 | Geniosil® XL 65 | 2,01 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | > 48 h | > 48 h | > 48 h | > 48 h | > 48 h | > 48 h | > 48 h | > 48 h | |
| Zeit bis zum Erreichen einer ausreichenden Anfangsfestigkeit | | | | | | | | | > 240 min |
| Zeit bis zum Erreichen von Repositionierbarkeit | >240 min | > 240 min | >240 min | > 240 min | >240 min | > 240 min | >240 min | > 240 min | |

K = Kohäsiv = Schaumspalten im Klebeband
A = Adhäsiv
h = Stunden
min = Minuten
sec = Sekunden

Vergleichsbeispiel 3

Zusammensetzung des Vergleichsprimers:

| Nr. | Rohstoff / Komponente | Gewichtsprozent |
|-----|----------------------|-----------------|
| 1 | Primer-Haftklebstoff 4 (40,0 Masseprozent Feststoffanteil) | 19,55 |
| 2 | Aceton | 25,25 |
| 3 | Isopropanol | 14,52 |
| 4 | Ethylacetat | 33,51 |
| 5 | Tyzor® TPT | 4,90 |
| 6 | Geniosil® XL 10 | 2,01 |
| 7 | Ethylendiamin | 0,26 |

Die Flash-Off Zeit betrug 40 sec.

Der Primer wurde mit den Testklebebändern geprüft, wobei die folgenden Ergebnisse erhalten wurden:

| | Testklebeband 1 | | Testklebeband 2 | | Testklebeband 3 | | Testklebeband 4 | | Testklebeband 5 |
|---|---|---|---|---|---|---|---|---|---|
| | Glas | Keramik | Glas | Keramik | Glas | Keramik | Glas | Keramik | Glas |
| Verklebungszeit bis zum Schaumspalten | > 48 h | > 48 h | > 48 h | > 48 h | > 48 h | > 48 h | > 48 h | > 48 h | |
| Zeit bis zum Erreichen einer ausreichenden Anfangsfestigkeit | | | | | | | | | > 240 min |
| Zeit bis zum Erreichen von Repositionierbarkeit | >240 min | > 240 min | >240 min | > 240 min | >240 min | > 240 min | >240 min | > 240 min | |
| K = Kohäsiv = Schaumspalten im Klebeband<br>A = Adhäsiv<br>h = Stunden<br>min = Minuten<br>sec = Sekunden | | | | | | | | | |

**Patentansprüche**

1. Primer, umfassend eine in einem oder mehreren Lösemitteln gelöste oder dispergierte Mischung G aus

   - mindestens einem Copolymerisat, erhalten durch Copolymerisation einer Monomerenmischung, umfassend zu mindestens 90 Gew.-% die folgenden Monomere:
   Vinylcaprolactam und/oder Vinylpyrrolidon und eines oder mehrere der Monomere a) und b):

   a) Acrylsäureester eines linearen, primären Alkohols mit 2 bis 10 Kohlenstoffatomen im Alkylrest des Alkohols,
   b) Acrylsäureester eines verzweigten, nichtzyklischen Alkohols mit 3 bis 12 Kohlenstoffatomen im Alkylrest des Alkohols,

   - mindestens einem organofunktionellen Silan der allgemeinen Struktur (Ia) oder (Ib)

   $$(R^1O\text{-})_x Si(CH_2OR^2)_y(R^3)_z \qquad (Ia)$$

   $$(R^1O\text{-})_x Si(CH_2NHR^2)_y(R^3)_z \qquad (Ib),$$

   worin

   die Reste $R^1$ unabhängig voneinander für einen $C_1$-$C_4$-Alkylrest, einen $C_2$-$C_6$-Alkoxyalkylrest oder einen Acetylrest stehen;
   die Reste $R^2$ unabhängig voneinander für einen organischen Rest stehen;
   die Reste $R^3$ unabhängig voneinander für einen $C_1$-$C_{18}$-Alkylrest stehen und
   x = 1, 2 oder 3; y = 1, 2 oder 3; x + y $\leq$ 4 und z = 4 - x - y ist;

   - mindestens einer Metallverbindung ausgewählt aus der Gruppe bestehend aus Metallacetylacetonaten, Metallalkoxiden und Alkoxy-Metallacetylacetonaten,
   - mindestens einem Amin, das keine Si-O-Alkyl-Gruppe enthält.

2. Primer gemäß Anspruch 1, **dadurch gekennzeichnet, dass** das Copolymerisat ein Haftklebstoff ist.

3. Primer gemäß einem der vorstehenden Ansprüche, **dadurch gekennzeichnet, dass** die Summe der Gewichtsanteile von Vinylcaprolactam und Vinylpyrrolidon an der Monomerenmischung 10 bis 50 Gew.-%, bezogen auf das Gesamtgewicht der Monomerenmischung, beträgt.

4. Primer gemäß einem der vorstehenden Ansprüche, **dadurch gekennzeichnet, dass** die Monomerenmischung maximal 1,0 Gew.-% Acrylsäure, bezogen auf das Gesamtgewicht der Monomerenmischung, enthält.

5. Primer gemäß einem der vorstehenden Ansprüche, **dadurch gekennzeichnet, dass** die Monomerenmischung n-Butylacrylat enthält.

6. Primer gemäß einem der vorstehenden Ansprüche, **dadurch gekennzeichnet, dass** der Anteil des Copolymerisats, bezogen auf das Gesamtgewicht des Primers, 1 bis 30 Gew.-% beträgt.

7. Primer gemäß einem der vorstehenden Ansprüche, **dadurch gekennzeichnet, dass** das mindestens eine organofunktionelle Silan N-Cyclohexylamino-methyltriethoxysilan (CAS-Nr.: 26495-91-0), Methacryloxymethyl-methyldimethoxysilan (CAS-Nr.: 121177-93-3), Methacryloxymethyltrimethoxysilan (CAS-Nr.: 54586-78-6), N-trimethoxysilylmethyl-O-methylcarbamat (CAS-Nr. 23432-64-6) oder N-Dimethoxy(methyl)silyl-methyl-O-methylcarbamat (CAS-Nr.: 23432-65-7) ist.

8. Primer gemäß einem der vorstehenden Ansprüche, **dadurch gekennzeichnet, dass** das Metall der Metallverbindung ausgewählt ist aus der Gruppe bestehend aus Titan, Aluminium, Zirkonium, Zink und Eisen.

9. Primer gemäß einem der vorstehenden Ansprüche, **dadurch gekennzeichnet, dass** das mindestens eine Amin ein primäres Amin ist.

10. Primer gemäß einem der vorstehenden Ansprüche, **dadurch gekennzeichnet, dass** der Gewichtsanteil der Gesamtheit aller Metallverbindungen in der Mischung G größer ist als der Gewichtsanteil der Gesamtheit aller Amine.

11. Primer gemäß einem der vorstehenden Ansprüche, **dadurch gekennzeichnet, dass** das eine oder die mehreren Lösemittel bei Normaldruck Siedepunkte von kleiner oder gleich 100°C haben.

12. Verwendung eines Primers gemäß einem der vorstehenden Ansprüche zur Herstellung einer haftvermittelnden Schicht.

13. Verwendung gemäß Anspruch 12, **dadurch gekennzeichnet, dass** die haftvermittelnde Schicht eine eingefärbte haftvermittelnde Schicht ist.

14. Verfahren zum Herstellen einer haftvermittelnden Schicht auf einem Substrat, umfassend das Aufbringen eines Primers gemäß einem der Ansprüche 1 bis 11 auf das Substrat und das Entfernen des einen oder der mehreren Lösemittel.

**Claims**

1. Primer comprising, dissolved or dispersed in one or more solvents, a mixture G of

   - at least one copolymer obtained by copolymerization of a monomer mixture comprising to at least 90 wt.% the following monomers:
   vinylcaprolactam and/or vinylpyrrolidone and one or more of the monomers a) and b):

       a) acrylic acid ester of a linear, primary alcohol having 2 to 10 carbon atoms in the alkyl radical of the alcohol,
       b) acrylic acid ester of a branched, noncyclic alcohol having 3 to 12 carbon atoms in the alkyl radical of the alcohol,

   - at least one organofunctional silane of the general structure (Ia) or (Ib)

   $$(R^1O\text{-})_x Si(CH_2OR^2)_y(R^3)_z \qquad \text{(Ia)}$$

   $$(R^1O\text{-})_x Si(CH_2NHR^2)_y(R^3)_z \qquad \text{(Ib)},$$

   wherein

       the radicals $R^1$ independently of each other represent a $C_1$-$C_4$-alkyl radical, a $C_2$-$C_6$-alkoxyalkyl radical or an acetyl radical;
       the radicals $R^2$ independently of each other represent an organic radical;
       the radicals $R^3$ independently of each other represent a $C_1$-$C_{18}$-alkyl radical and
       x = 1, 2 or 3; y = 1, 2 or 3; x + y $\leq$ 4 and z = 4 - x - y;

   - at least one metal compound selected from the group consisting of metal acetylacetonates, metal alkoxides and alkoxy-metal acetylacetonates,
   - at least one amine which contains no Si-O-alkyl group.

2. Primer according to Claim 1, **characterized in that** the copolymer is a pressure-sensitive adhesive.

3. Primer according to one of the preceding claims, **characterized in that** the sum of the weight contents of vinylcaprolactam and vinylpyrrolidone in the monomer mixture is 10 to 50 wt.%, based on the total weight of the monomer mixture.

4. Primer according to one of the preceding claims, **characterized in that** the monomer mixture comprises a maximum of 1.0 wt.% of acrylic acid, based on the total weight of the monomer mixture.

5. Primer according to one of the preceding claims, **characterized in that** the monomer mixture comprises n-butyl acrylate.

6. Primer according to one of the preceding claims, **characterized in that** the content of the copolymer, based on the total weight of the primer, is 1 to 30 wt.%.

7. Primer according to one of the preceding claims, **characterized in that** the at least one organofunctional silane is N-cyclohexylaminomethyltriethoxysilane (CAS no.: 26495-91-0), methacryloxymethylmethyldimethoxysilane (CAS no.: 121177-93-3), methacryloxymethyltrimethoxysilane (CAS no.: 54586-78-6), N-trimethoxysilylmethyl-O-methyl carbamate (CAS no. 23432-64-6) or N-dimethoxy(methyl)silylmethyl-O-methyl carbamate (CAS no.: 23432-65-7).

8. Primer according to one of the preceding claims, **characterized in that** the metal of the metal compound is selected from the group consisting of titanium, aluminium, zirconium, zinc and iron.

9. Primer according to one of the preceding claims, **characterized in that** the at least one amine is a primary amine.

10. Primer according to one of the preceding claims, **characterized in that** the weight content of the total of all the metal compounds in mixture G is greater than the weight content of the total of all the amines.

11. Primer according to one of the preceding claims, **characterized in that** the one or more solvents have boiling points of less than or equal to 100°C under normal pressure.

12. Use of a primer according to one of the preceding claims for producing an adhesion-promoting layer.

13. Use according to Claim 12, **characterized in that** the adhesion-promoting layer is a pigmented adhesion-promoting layer.

14. Process for producing an adhesion-promoting layer on a substrate, comprising applying a primer according to one of Claims 1 to 11 to the substrate and removing the one or more solvents.

**Revendications**

1. Primaire, comprenant un mélange G dissous ou dispersé dans un ou plusieurs solvants, constitué par :

   - au moins un copolymère, obtenu par copolymérisation d'un mélange de monomères, comprenant au moins 90 % en poids des monomères suivants :
   le vinylcaprolactame et/ou la vinylpyrrolidone et un ou plusieurs des monomères a) et b) :

   a) un ester de l'acide acrylique d'un alcool primaire linéaire contenant 2 à 10 atomes de carbone dans le radical alkyle de l'alcool,
   b) un ester de l'acide acrylique d'un alcool non cyclique ramifié contenant 3 à 12 atomes de carbone dans le radical alkyle de l'alcool,

   - au moins un silane organofonctionnel de structure générale (Ia) ou (Ib)

$$(R^1O\text{-})_x Si(CH_2OR^2)_y(R^3)_z \qquad (Ia)$$

$$(R^1O\text{-})_x Si(CH_2NHR^2)_y(R^3)_z \qquad (Ib),$$

   dans lesquelles

   les radicaux $R^1$ représentent indépendamment les uns des autres un radical alkyle en $C_1$-$C_4$, un radical alcoxyalkyle en $C_2$-$C_6$ ou un radical acétyle ;
   les radicaux $R^2$ représentent indépendamment les uns des autres un radical organique ;
   les radicaux $R^3$ représentent indépendamment les uns des autres un radical alkyle en $C_1$-$C_{18}$, et
   x = 1, 2 ou 3 ; y = 1, 2 ou 3 ; x + y ≤ 4 et z = 4 - x - y ;

   - au moins un composé métallique choisi dans le groupe constitué par les acétylacétonates métalliques, les alcoxydes métalliques et les acétylacétonates alcoxy-métalliques,
   - au moins une amine, qui ne contient pas de groupe Si-O-alkyle.

**2.** Primaire selon la revendication 1, **caractérisé en ce que** le copolymère est un adhésif de contact.

**3.** Primaire selon l'une quelconque des revendications précédentes, **caractérisé en ce que** la somme des proportions en poids de vinylcaprolactame et de vinylpyrrolidone dans le mélange de monomères est de 10 à 50 % en poids, par rapport au poids total du mélange de monomères.

**4.** Primaire selon l'une quelconque des revendications précédentes, **caractérisé en ce que** le mélange de monomères contient au plus 1,0 % en poids d'acide acrylique, par rapport au poids total du mélange de monomères.

**5.** Primaire selon l'une quelconque des revendications précédentes, **caractérisé en ce que** le mélange de monomères contient de l'acrylate de n-butyle.

**6.** Primaire selon l'une quelconque des revendications précédentes, **caractérisé en ce que** la proportion du copolymère, par rapport au poids total du primaire, est de 1 à 30 % en poids.

**7.** Primaire selon l'une quelconque des revendications précédentes, **caractérisé en ce que** ledit au moins un silane organofonctionnel est le N-cyclohexylamino-méthyltriéthoxysilane (n° CAS : 26495-91-0), le méthacryloxyméthyl-méthyldiméthoxysilane (n° CAS : 121177-93-3), le méthacryloxyméthyltriméthoxysilane (n° CAS : 54586-78-6), le carbamate de N-triméthoxysilylméthyl-O-méthyle (n° CAS : 23432-64-6) ou le carbamate de N-diméthoxy(méthyl)silyl-méthyl-O-méthyle (n° CAS : 23432-65-7).

**8.** Primaire selon l'une quelconque des revendications précédentes, **caractérisé en ce que** le métal du composé métallique est choisi dans le groupe constitué par le titane, l'aluminium, le zirconium, le zinc et le fer.

**9.** Primaire selon l'une quelconque des revendications précédentes, **caractérisé en ce que** ladite au moins une amine est une amine primaire.

**10.** Primaire selon l'une quelconque des revendications précédentes, **caractérisé en ce que** la proportion en poids de la totalité des composés métalliques dans le mélange G est supérieure à la proportion en poids de la totalité des amines.

**11.** Primaire selon l'une quelconque des revendications précédentes, **caractérisé en ce que** le ou les solvants ont à pression normale des points d'ébullition inférieurs ou égaux à 100 °C.

**12.** Utilisation d'un primaire selon l'une quelconque des revendications précédentes pour la fabrication d'une couche de promoteur d'adhésion.

**13.** Utilisation selon la revendication 12, **caractérisée en ce que** la couche de promoteur d'adhésion est une couche de promoteur d'adhésion colorée.

**14.** Procédé de fabrication d'une couche de promoteur d'adhésion sur un substrat, comprenant l'application d'un primaire selon l'une quelconque des revendications 1 à 11 sur le substrat et l'élimination du ou des solvants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2008094721 A1
- JP 2008156566 A
- WO 02100961 A1
- WO 03052021 A1
- EP 833865 B1
- EP 833866 B1
- EP 739383 B1
- US 5602202 A
- DE 102011077510 A1
- DE 102009007930 A1
- DE 102007030196 A1
- EP 577014 A1
- EP 1693350 A1
- EP 1730247 A1
- US 20080245271 A
- US 2008023425 A
- WO 2008025846 A2
- US 6646048 B2
- DE 102013206369 A1
- DE 102013206376 A1
- DE 102014208814
- DE 102010062669

### In der Beschreibung aufgeführte Nicht-Patentliteratur

- **J. BIELEMANN.** Lackadditive. 1998, 114-129
- *CHEMICAL ABSTRACTS,* 2235-00-9
- *CHEMICAL ABSTRACTS,* 88-12-0
- *CHEMICAL ABSTRACTS,* 123-54-6
- *CHEMICAL ABSTRACTS,* 141-78-6
- *CHEMICAL ABSTRACTS,* 67-64-1
- *CHEMICAL ABSTRACTS,* 64-17-5
- *CHEMICAL ABSTRACTS,* 67-63-0
- *CHEMICAL ABSTRACTS,* 26495-91-0
- *CHEMICAL ABSTRACTS,* 121177-93-3
- *CHEMICAL ABSTRACTS,* 54586-78-6
- *CHEMICAL ABSTRACTS,* 23432-64-6
- *CHEMICAL ABSTRACTS,* 23432-65-7
- *CHEMICAL ABSTRACTS,* 4083-64-1
- *CHEMICAL ABSTRACTS,* 7128-64-5
- *CHEMICAL ABSTRACTS,* 15520-11-3, 78-67-1, 13472-08-7, 3126-63-4, 2386-87-0, 112-24-3, 25359-84-6, 25359-84-6, 141-32-2, 79-10-7, 103-11-7, 96-33-3, 9003-55-8, 61791-14-8, 57583-54-7,